# EUROPÄISCHE PATENTSCHRIFT

(11) **EP 0 743 313 B1**
(45) Veröffentlichungstag und Bekanntmachung des Hinweises auf die Patenterteilung: **20.03.2002**
(21) Anmeldenummer: 96106954.9
(22) Anmeldetag: 03.05.1996
(51) Int. Cl.: C07F 7/08, C08G 77/50, C08G 77/58, C09D 183/14

(54) **Carbosilan-Dendrimere, Carbosilan-Hybridmaterialien, Verfahren zu deren Herstellung und ein Verfahren zur Herstellung von Lacken aus den Carbosilan-Dendrimeren**
Carbosilan dendrimers, carbosilane hybrid materials, process for their preparation and a process for making paints based on these carbosilane dendrimers
Carbosilanes dendrimères, matériaux hybrides de carbosilanes, procédé pour leur préparation et un procédé de fabrication de peintures à partir de ces carbosilanes dendrimères

(30) Priorität: 16.05.1995 DE 19517839; 30.01.1996 DE 19603242
(43) Veröffentlichungstag der Anmeldung: 20.11.1996
(73) Patentinhaber: BAYER AG, 51368 Leverkusen (DE)
(72) Erfinder: Mager, Michael, Dr., 51375 Leverkusen (DE); Jentsch, Jörg-Dietrich, Dr., 45468 Mühlheim a.d. Ruhr (DE); Schild, Christoph, Dr., 51373 Leverkusen (DE)

(56) Entgegenhaltungen:
- WO-A-94/02536
- WO-A-94/06807
- US-A- 5 276 110
- MACROMOLECULES, Bd. 28, Nr. 19, 11.September 1995, Seiten 6657-6661, XP000527663 LORENZ K ET AL: "CARBOSILANE-BASED DENDRITIC POLYOLS"

## Beschreibung

Die vorliegende Erfindung betrifft neue funktionelle Carbosilan-Dendrimere, organisch-anorganische Carbosilan-Hybridmaterialien, jeweils Verfahren zu deren Herstellung, Verfahren zur Herstellung von Lacken aus den funktionellen Carbosilan-Dendrimeren sowie deren Verwendung.

Als Dendrimere bezeichnet man stark verzweigte Moleküle mit hochgeordneter meist dreidimensionaler Struktur, deren Molmasse im Bereich derer von Oligo- oder Polymeren liegt.

Dendrimere haben jedoch den Vorteil, daß sie mit exakt einheitlicher Molmasse gezielt aufgebaut werden können, während die üblichen Polymere stets eine bestimmte Molmassenverteilung zeigen. Zudem sind bestimmte funktionelle Dendrimere, wie z.B. solche mit Vinylendgruppen, mit einer definierten Anzahl solcher reaktiver Gruppen herstellbar.

Die bisher bekannten Carbosilan-Dendrimere werden ausgehend von einem Initiatorkern durch alternierende Hydrosilylierung und Grignard-Reaktion aufgebaut (US-A-5,276,110, Adv. Mater. 1993, 5, 466-468, Macromolecules 1993, 26, 963-968, J. Chem. Soc., Chem. Commun. 1994, 2575-2576 und Organometallics 1994, 13, 2682-2690). Zum Beispiel wird das Initiatormolekül Tetravinylsilan in THF unter Pt-Katalyse mit HSiCl₂CH₃ zur Reaktion gebracht. Durch Umsetzung mit Vinylmagnesiumhalogenid wird wiederum ein Vinylsilan aufgebaut, welches erneut für eine Hydrosilylierung zur Verfügung steht.

Es war jedoch bisher unmöglich höhermolekulare Carbosilan-Dendrimere mit einer definierten Anzahl an funktionellen Endgruppen Si-OH bereitzustellen.

Si-OH-funktionelle Carbosilan-Dendrimere ermöglichen jedoch eine Vielzahl von Reaktionen, wie z.B. die Anbindung an Metallverbindungen, gemäß Gleichung 1 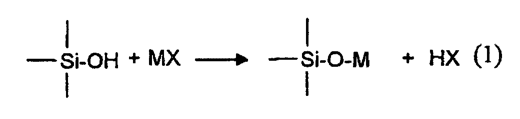 mit M = Metall und X = Alkyl, Alkoxy, Halogeno oder Hydrido
und sind daher von großem Interesse. So ist beispielsweise die Anbindung katalytisch aktiver Metallverbindungen, z.B. zu deren Immobilisierung oder aber die Herstellung von organisch-anorganischen Hybridmaterialien, überaus wichtig. Es ist bereits aus WO 94/06807 bekannt, daß organisch-anorganische Hybridmaterialien hergestellt werden können, indem man Carbosilane mit Trialkoxysilangruppen mit Wasser und einem Katalysator oder einer Carbonsäure in einem geeigneten Lösungsmittel zur Reaktion bringt. Durch Eintauchen geeigneter Substrate in diese Lösungen (dip coating) sind sehr dünne, transparente Filme rißfrei erhältlich. Diese Carbosilan-Dendrimere mit Si-O-Alkyl-Endgruppen unterliegen in Gegenwart von Feuchtigkeit langsam der Hydrolyse. Die Reaktivität von Metallalkoxiden gegenüber Hydrolyse und Kondensation ist sehr verschieden. Alkoxide von Titan, Zirkonium oder Aluminium reagieren mit Wasser sehr viel rascher als die entsprechenden Siliciumalkoxide. Eine Cokondensation der genannten Alkoxide ist sehr schwierig, da die reaktiven Species so rasch mit Wasser reagieren, daß sie oft nicht in ein homogenes Netzwerk eingebettet werden, sondern vielmehr Niederschläge aus den entsprechenden Metall(hydroxy)oxiden bilden. Um dies zu verhindern muß die Konzentration von Wasser in der Reaktionslösung möglichst klein sein.

Es bestand daher ein großer Bedarf an Si-OH-funktionellen Carbosilan-Dendrimeren, die mit reaktiven Metallalkoxiden umgesetzt werden können, ohne daß das System zusätzlich Wasser enthalten muß.

Besonders für die Anwendung als Lackrohstoff ist darüberhinaus eine ausreichende Lagerstabilität von funktionellen Carbosilan-Dendrimeren wünschenswert.

Aufgabe der vorliegenden Erfindung war daher die Bereitstellung von hochmolekularen funktionellen Carbosilan-Dendrimeren, die über eine definierte Anzahl an endständigen Si-OH-Gruppen verfügen, somit ohne die Anwesenheit von Wasser mit Metallalkoxiden, wie z.B. Ti(OR)₄, Zr(OR)₄, Al(OR)₃ oder auch Si(OR)₄, zu Carbosilan-Dendrimeren mit O-Metall-Bindungen umgesetzt werden können, die bei der Hydrolyse mit Wasser die zuvor beschriebenen Nachteile der Niederschlagsbildung durch Metall(hydroxy)oxide nicht aufweisen und die homogenen Netzwerke ausbilden. Zudem sollen die Carbosilan-Dendrimere eine unbegrenzte Lagerstabilität aufweisen. Zudem sollten die Verbindungen einfach herstellbar sein.

Überraschenderweise wurde nun gefunden, daß Carbosilan-Dendrimere mit endständigen Si-OH-Resten, die mit Alkyl- und/oder Arylgruppen stabilisiert sind, diese Anforderungen erfüllen.

Gegenstand der vorliegenden Erfindung sind daher funktionelle Carbosilan-Dendrimere der Formel

R₄₋ᵢSi[(CH₂)ₙSiXₐR₃₋ₐ]ᵢ (I)

mit i = 3,4, bevorzugt i = 4, n = 2-6, bevorzugt n = 2 und R = Alkyl und/oder Aryl, wobei n innerhalb des Moleküls gleich oder ungleich sein kann und wobei die weiteren Reste die folgende Bedeutung haben
a) X = OH
   mit a = 1
   oder
b) X = [(CH₂)ₙSi(OH)R₂]
   mit a = 1 bis 3, bevorzugt a = 3
   oder
c) X = [(CH₂)ₙSiR₃₋ₐ[(CH₂)ₙSi(OH)R₂]ₐ]
   mit a = 1 - 3, bevorzugt a = 3
   oder
d) X = [(CH₂)ₙSiR₃₋ₐ[(CH₂)ₙSiR₃₋ₐ[(CH₂)ₙSi(OH)R₂]ₐ]ₐ]
   mit a = 1 - 3, bevorzugt a = 3.

Die Alkylreste R im Sinne der Erfindung sind vorzugsweise lineare oder verzweigte, gegebenenfalls substituierte C₁-C₅-Alkylreste.

Der Begriff substituiert im Sinne der Erfindung umfaßt alle gängigen Substituenten, wie z.B. Halogen, Alkyl, Amin usw..

Die Arylreste R im Sinne der Erfindung sind vorzugsweise gegebenenfalls substituierte C₆-Ringe.

Ausformuliert entsprechen die erfindungsgemäßen Carbosilan-Dendrimere den Formeln (Ia-d)

R₄₋ᵢSi[(CH₂)ₙSi(OH)R₂]ᵢ (Ia)

oder

R₄₋ᵢSi[(CH₂)ₙSiR₃₋ₐ[(CH₂)ₙSi(OH)R₂]ₐ]ᵢ (Ib)

oder

R₄₋ᵢSi[(CH₂)ₙSiR₃₋ₐ[(CH₂)ₙSiR₃₋ₐ[(CH₂)ₙSi(OH)R₂]ₐ]ₐ]ᵢ (Ic)

oder

R₄₋ᵢSi[(CH₂)ₙSiR₃₋ₐ[(CH₂)ₙSiR₃₋ₐ[(CH₂)ₙSiR₃₋ₐ[(CH₂)ₙSi(OH)R₂]ₐ]ₐ]ₐ]ᵢ, (Id).

In einer bevorzugten Ausführungsform der vorliegenden Erfindung sind die Werte der Indizes n innerhalb des Moleküls gleich.

Besonders bevorzugt sind Carbosilan-Dendrimere der Formeln

Si[(CH₂)₂Si(OH)Me₂]₄, Si[(CH₂)₂Si[(CH₂)₂Si(OH)Me₂]₃]₄

oder

Si[(CH₂)₃Si(OH)Me₂]₄.

Bemerkenswert ist ebenfalls die ausgezeichnete Lagerstabilität der erfindungsgemäßen Carbosilan-Dendrimere. Die farblosen Pulver können auch an feuchter Luft monatelang unverändert aufbewahrt werden. Im Gegensatz zu bereits bekannten Carbosilan-Dendrimeren mit funktionellen Endgruppen, wie z.B. Si-Vinyl, Si-O-Alkyl oder Si-Cl, steht nur für die neue Carbosilan-Dendrimere ein effektiver Reinigungsschritt zur Verfügung, welcher im Unterschied zu chromatographischen Methoden auch im technischen Maßstab durchführbar ist.

Herausragend reine und somit einheitliche Carbosilan-Dendrimere können in großen Mengen zur Verfügung gestellt werden. Aus diesen Si-OH-funktionellen Carbosilan-Dendrimeren sind durch Umsetzung mit Metallalkoxiden in Gegenwart eines Katalysators Carbosilan-Dendrimere mit O-Metall-Bindungen erhältlich. Zudem wurde gefunden, daß diese nach der Hydrolyse mit Wasser und Vernetzung durch Kondensation über einen Sol-Gel-Prozeß organisch-anorganische Hybridmaterialien mit überragenden Eigenschaften ergeben. Diese finden Verwendung als Lack zur transparenten Beschichtung von Oberflächen. Besonders erwähnt seien dabei die hohe Kratzfestigkeit bei gleichzeitiger Flexibilität, Transparenz, gute thermische Stabilität und chemische Resistenz.

Gegenstand der vorliegenden Erfindung ist zudem ein Verfahren zur Herstellung der erfindungsgemäßen Carbosilan-Dendrimere nach Formel (I), wonach die Dendrimere der Formeln (II)

R₄₋ᵢSi[(CH₂)ₙSiZ_{c}R_{3-c}]ᵢ (II)

mit i = 3,4, bevorzugt i = 4, n = 2 bis 6, bevorzugt n = 2 und R = Alkyl und/oder Aryl, worin n innerhalb des Moleküls gleich oder ungleich sein kann und wobei die weiteren Reste die folgende Bedeutung haben:
a) Z = Cl, Br, I, OR
   mit c = 1,
   oder
b) Z = [(CH₂)ₙSiWR₂]
   mit c = 1 bis 3, bevorzugt c = 3 und
   W im folgenden die Bedeutung von Cl, Br, I oder OR hat
   oder
c) Z = [(CH₂)ₙSiR_{3-c}[(CH₂)ₙSiWR₂]_{c}]
   mit c = 1 bis 3, bevorzugt c = 3,
   oder
d) Z = [(CH₂)ₙSiR_{3-c}[(CH₂)ₙSiR_{3-c}[(CH₂)ₙSiWR₂]_{c}]_{c}]
   mit c = 1 bis 3, bevorzugt c = 3,
in Gegenwart einer Base mit Wasser in einem unpolaren Lösungsmittel hydrolysiert werden.

Basen im Sinne der Erfindung sind bevorzugt Triorganoamine, wobei die Organoreste alle gängigen Alkyl, Aryl und Phenylreste, linear oder verzweigt und gegebenenfalls substituiert umfassen, bevorzugt Trialkylamine, besonders bevorzugt entspricht Alkyl einem C₁-C₃-Rest. Bevorzugt werden Wasser und auch Trialkylamin im Überschuß eingesetzt.

Bevorzugt wird das erfindungsgemäße Verfahren bei Temperaturen ≥ Raumtemperatur, besonders bevorzugt bei 25 bis 50°C, ganz besonders bevorzugt bei 30°C durchgeführt. Unpolare Lösungsmittel im Sinne der Erfindung sind aliphatische Ether, bevorzugt tert.-Butylmethylether.

Die Edukte können in einer beliebigen Reihenfolge gemischt werden. In einer bevorzugten Ausführungsform der vorliegenden Erfindung wird eine Verbindung der Formeln (IIa-d) gelöst in einem unpolaren Lösungsmittel zu einer Mischung, bestehend aus Base, Wasser und unpolarem Lösemittel bei Temperaturen ≥ Raumtemperatur unter Rühren zugetropft und danach noch mindestens 1 Stunde weitergerührt.

Die Verbindungen der Formel (IIa) können nach gängigen Methoden durch die Umsetzung eines geeigneten ungesättigten Silans mit einem Hydridosilan, wie z.B. eines Alkoxy- oder Halogenosilans, in Gegenwart eines Katalysators, z.B. Hexachloroplatinsäure in Isopropanol, in einem unpolaren Lösungsmittel hergestellt werden.

Die auf diese Weise erhaltenen Silane der Formel (IIa) können in einem weiteren Schritt in einer Grignard-Reaktion mit einem Alkenylmagnesiumhalogenid in aliphatischem Ether zu Verbindungen mit Alkenylsilanfunktionalität umgesetzt werden. Zur Herstellung der Verbindungen der Formel (IIb), (IIc) und (IId) können die obengenannten Schritte wiederholt werden.

Allgemeine Herstellvorschriften der Verbindungen IIa bis IId sind zudem in US-A-5,276,110, Adv. Mater. 1993, 5, 466-468, Macromolecules 1993, 26, 963-968, J. Chem. Soc., Chem. Commun. 1994, 2575-2576 und Organometallics 1994, 13, 2682-2690 beschrieben.

Zur Herstellung von Verbindungen der Formel (III) durch Hydrosilylierung von Alkenylsilanen der Formel (IV) mit Hydridosilanen der Formel (V) sind u.a. in der obengenannten Literatur Hexachloroplatinsäure und ein Bis[divinyltetramethylsiloxan]platin(0)-Komplex (Karstedt-Katalysator) als homogene Katalysatoren beschrieben. Diese werden gelöst, z.B. in Alkoholen bzw. in Xylol, eingesetzt.

Bei vielen Hydrosilylierungen liefern diese Katalysatoren sehr gute Ergebnisse bezüglich Regioselektivität und Ausbeute, jedoch hat sich gezeigt, daß mit ihnen auch Nachteile verbunden sind. Dies wird vor allem dann deutlich, wenn Reaktionen vom Labormaßstab in den technischen Maßstab übertragen werden sollen.

Als Beispiel sei hier die Umsetzung von Tetravinylsilan mit Chlordimethylsilan, wie in DE-A-19 717 839 und Organometallics 1995, 28, 6657-6661 beschrieben, genannt. Die Katalyse mit Hexachloroplatinsäure in Isopropanol bzw. mit dem Karstedt-Katalysator liefert dabei das gewünschte Si[(CH₂)₂SiClMe₂]₄ in guter Ausbeute. Die Addition erfolgt regioselektiv und die Bildung von Markoffnikov-Produkten findet, wenn überhaupt, nur in vernachlässigbaren Mengen statt.

Die Umsetzungen von Tetravinylsilan mit HSiCl₃, HSiCl₂Me oder HSiClMe₂, bei welchen jeweils vier Si-C-Bindungen geknüpft werden, sind allesamt stark exotherm. Wie in Macromolecules 1993, 26, 963-968 beschrieben, ist es oft schon bei Ansätzen von einigen Gramm notwendig, das Reaktionsgefäß mit einem Kältebad abzukühlen, da ein Rückflußkühler allein das niedrigsiedende Chlorsilan nicht mehr zurückkondensieren kann.

Neben der starken Wärmeentwicklung ist es darüber hinaus sehr schwierig abzuschätzen, wann genau die Reaktion einsetzt. Wurden alle Edukte gründlichst gereinigt und der Katalysator unmittelbar vor der Reaktion frisch angesetzt, so kommt die Reaktion zuweilen ohne zusätzliches Erwärmen selbst in Gang. In den meisten Fällen jedoch bedarf es der Zufuhr von Wärme. Beim Einsetzen der Reaktion ist die vorgewärmte Mischung dann umso schwerer etwa durch Kühlen unter Kontrolle zu bringen. Sowohl Spuren von Verunreinigungen in den Edukten (Wasser, HCl), als auch eine veränderte Katalysatoraktivität könnten hierfür als Ursache angesehen werden.

In Adv. Organometallic Chem. 1979, 17, 407-409 ist dieses Reaktionsverhalten als "Induction Period" beschrieben, und wird auf die Bildung der eigentlich katalytisch aktiven Species während dieser "Induktionsperiode" zurückgeführt.

Solch ein wenig vorhersehbarer Reaktionsverlauf ist für eine technische Durchführung ungünstig. Die rasche Wärmeabfuhr nach dem Einsetzen der exothermen Reaktion ist nur mit einem großen technischen Aufwand, wenn überhaupt, realisierbar.

Ein weiterer Nachteil der homogenen Katalyse besteht darin, daß der Katalysator, wenn auch nur in geringer Konzentration, im Produkt verbleibt. Neben der Tatsache, daß wertvolles Edelmetall verloren geht, resultieren aus dem Einbau meist schädigende Einflüsse auf nachfolgende Produkte.

Es wurde nun gefunden, daß die regioselektive Addition von Hydridosilanen an Alkenylsilane unter Bildung der gewünschten anti-Markoffnikov-Produkte ohne die obengenannten Nachteile und in hoher Ausbeute (typischerweise um 90% (Reinheit des eingesetzten Alkenylsilans unberücksichtigt)) erfolgt, wenn diese Reaktion heterogen katalysiert wird.

Diese heterogene Katalyse hat zudem den Vorteil, daß Teilsubstitutionprodukte (verbleibende Alkenylgruppen) sowie Markoffnikov-Produkte gar nicht oder, wenn überhaupt, nur in geringsten Mengen gefunden werden.

Es läßt sich mit den im erfindungsgemäßen Verfahren eingesetzten heterogenen Katalysatoren der Reaktionsverlauf der Hydrosilylierung und auch die Wärmeentwicklung zuverlässig über den Katalysatorgehalt steuern. Eine verminderte Katalysatorkonzentration führt unmittelbar zu einer verringerten Wärmeentwicklung. Damit ist eine einfache großtechnische Realisierung des Verfahrens möglich.

Zudem erübrigt sich durch den Einsatz des erfindungsgemäßen Katalysators häufig die Vorreinigung der Edukte.

Ein weiterer Vorteil der in dem erfindungsgemäßen Verfahren eingesetzte heterogene Katalysatoren bei einer technischen Durchführung ist, daß die Hydrosilylierung gegebenenfalls im kontinuierlichen Betrieb geführt werden kann, was die Raum-Zeit-Ausbeute erheblich steigert.

Im kontinuierlichen und diskontinuierlichen Betrieb ist die Abtrennung des geträgerten Katalysators, z.B. durch Filtration, problemlos möglich.

Sowohl im kontinuierlichen als auch im diskontinuierlichen Betrieb erhält man Produkte, die frei von Katalysatorresten sind.

Zudem können die geträgerten Katalysatoren, im Gegensatz zu den nach dem Stand der Technik bekannten homogenen Katalysatoren, wie z.B. Hexachloroplatinsäure in Isopropanol, ohne Aktivitätsverlust und ohne spezielle Maßnahmen gelagert werden.

Gegenstand der Erfindung ist daher ein Verfahren zur Herstellung von Carbosilan-Dendrimeren der Formel (III),

R₄₋ᵢSi[(CH₂)ₚSiZₑR₃₋ₑ]ᵢ (III)

mit p=2-10, e=1-3, i=3,4 und R=Alkyl und/oder Aryl, wobei p innerhalb des Moleküls gleich oder ungleich, bevorzugt gleich, sein kann und wobei die weiteren Reste die folgende Bedeutung haben:
a) Z = Halogen, OR, bevorzugt Z = Cl
   oder
b) Z= [(CH₂)ₚSiWₑR₃₋ₑ] mit W = Halogen, OR, bevorzugt W = Cl,
   oder
c) Z= [(CH₂)ₚSiR₃₋ₑ[(CH₂)ₚSiWₑR₃₋ₑ]ₑ] mit W = Halogen, OR, bevorzugt W = Cl,
   dadurch gekennzeichnet, daß Alkenylsilane der Formel (IV)

   R₄₋ᵢSi[(CH₂)ₚ₋₂Q]ᵢ

   mit p = 2-10, i = 3,4, R = Alkyl und/oder Aryl und

a) Q = C₂H₃
   oder
b) Q = [(CH₂)ₚSi(C₂H₃)ₑR₃₋ₑ] mit e = 1-3
   oder
c) Q = [(CH₂)ₚSiR₃₋ₑ[(CH₂)ₚSi(C₂H₃)ₑR₃₋ₑ]ₑ] mit e = 1-3
   mit Hydridosilanen der Formel (V)

   HSiPₑR₃₋ₑ

   mit e = 1-3, P = Halogen, OR, bevorzugt P = Cl, und R = Alkyl und/oder Aryl in Gegenwart von heterogenen Katalysatoren umgesetzt werden.

Als Alkenylsilan werden dabei vorzugsweise Tetravinylsilan und als Hydridosilane HSiCl₃, HSiCl₂Me oder HSiClMe₂ eingesetzt.

Besonders bevorzugt werden Tetravinylsilan und HSiClMe₂ eingesetzt.

Der heterogene Katalysator besteht vorzugsweise aus Platin oder einer Platinverbindung, welche auf die verschiedensten Trägermaterialien aufgebracht werden kann. Als Trägermaterialien seien Stoffe basierend auf Kohle oder Metalloxiden bzw. Metalloxidgemischen beispielhaft genannt. Die Tägermaterialien können synthetischen oder natürlichen Ursprungs sein, d.h. z.B. aus Tonmineralien, Bimsstein, Kaolin, Bleicherden, Bauxite, Bentonite, Kieselgur, Asbest oder Zeolith bestehen. In einer bevorzugten Ausführungsform der Erfindung wird der katalytisch aktive Bestandteil auf einem kohlehaltigen Träger, wie z.B. Aktivkohle, Ruß, Graphit oder Koks aufgebracht, eingesetzt, wobei Aktivkohle bevorzugt ist.

Der geträgerte Katalysator kann sowohl pulverförmig, als auch stückig, z.B. als Kugeln, Zylinder, Stäbchen, Hohlzylinder oder Ringe, eingesetzt werden.

Der in dem erfindungsgemäßen Verfahren eingesetzte Katalysator ist vorzugsweise auf einen geeigneten Träger aufgebracht. Seine Reaktivkomponente besteht vorzugsweise im reaktionsbereiten Zustand aus einem Platin-Halogenid oder einer Platin-Halogenid enthaltenden Komplexverbindung, die außerdem beispielsweise Olefine, Amine, Phosphine, Nitrile, Kohlenmonoxid oder Wasser enthalten kann, wie A₂PtCl₆, wobei A beispielsweise für H, Li, Na, K, NH₄, Rb, Cs, NR₄ mit R: organischer Rest C₆- bis C₁₀-Aryl-, C₇- bis C₁₂-Aralkyl- und/oder C₁- bis C₂₀-Alkyl-Rest, und Hal für ein Halogen, wie beispielsweise F, Cl, Br, I steht. Solche Halogen enthaltenden Platin-Komplexverbindungen sind grundsätzlich bekannt.

In einer bevorzugten Ausführungsform der Erfindung wird der in dem erfindungsgemäßen Verfahren eingesetzte Katalysator in situ erzeugt. Dafür wird das Platin-Halogenid bzw. die das Platin-Halogenid enthaltende Komplexverbindung während der Präparation aus einer geeigneten halogenfreien Platinmetall-Verbindung und einer Halogenid- enthaltenden Verbindung auf dem Träger in situ hergestellt. Als halogenfreie Platinmetall-Verbindungen kommen z.B. Platinnitrat, -oxid, -hydroxid, -acetylacetonat und andere dem Fachmann geläufige Verbindungen in Frage. Als Halogenid enthaltende Verbindungen kommen halogenhaltige Salze und Komplexverbindungen der Elemente der ersten bis dritten Hauptgruppe und der ersten bis achten Nebengruppe des Periodensystems der Elemente (Mendelejew) sowie der Seltenerdmetalle (Atomnummern 58-71) in Frage. Beispiele sind NaBr, NaCl, MgBr₂, AlCl₃, NaPF₆, MnCl₂, CoBr₂, CeCl₃, SmI₂, CuCl₂, Na₂ZnCl₄, TiCl₄.

Die Menge des Platin-Halogenids oder der des Platin-Halogenids enthaltende Komplexverbindung im reaktionsbereiten Zustand beträgt bevorzugt 0,01 bis 15 Gew.-%, besonders bevorzugt 0,05 bis 10 Gew.-%, gerechnet als Platinmetall und bezogen auf das Gesamtgewicht des Katalysators.

Bevorzugte Lösungsmittel für die Herstellung von erfindungsgemäßen Träger-Katalysatoren sind z.B. Wasser, aliphatische Kohlenwasserstoffe, wie Pentan, n-Hexan, Cyclohexan usw., aliphatische halogenierte Kohlenwasserstoffe, wie Dichlormethan, Trichlormethan, usw., aromatische Kohlenwasserstoffe, wie Benzol, Toluol, Xylol usw., halogenierte aromatische Kohlenwasserstoffe, wie Chlorbenzol, Dichlorbenzol, usw., primäre, sekundäre oder tertiäre Alkohole, wie Methanol, Ethanol, n-Propanol, iso-Propanol, n-Butanol, iso-Butanol, t-Butanol, Cumylalkohol, iso-Amylalkohol, Diethylenglykol, usw., Ketone, wie Aceton, 2-Butanon, Methylisobutylketon, Acetylaceton usw., Ether, wie Diethylether, Diisopropylether, Methyl-t-butylether, Dioxan, Tetrahydrofuran, usw., Ester, wie Methylacetat, Ethylacetat, usw., Nitrile, wie Acetonitril, Benzonitril, usw., Carbonate, wie Dimethylcarbonat, Diethylcarbonat, Diphenylcarbonat, usw., Dimethylacetamid, N-Methylpyrrolidinon und Tetramethylharnstoff genannt. Selbstverständlich können auch Mischungen solcher Lösungsmittel eingesetzt werden.

Die Herstellung eines erfindungsgemäß einzusetzenden Katalysators erfolgt nach Methoden, die dem Fachmann grundsätzlich bekannt sind. So können Platinhaltige Lösungen und die genannten halogenidhaltigen Verbindungen durch Tränken, Adsorption, Tauchen, Sprühen, Imprägnieren und Ionenaustausch auf den erfindungsgemäß einzusetzenden Katalysatorträger gebracht werden. Es ist weiterhin möglich, Platin und die genannten halogenidhaltigen Verbindungen mit einer Base auf dem Träger zu fixieren. Als Base kommen z.B. NaOH, Li₂CO₃ und Kaliumphenolat in Frage. Platin und die halogenidhaltige Verbindung können sowohl in beliebiger Reihenfolge nacheinander als auch gleichzeitig auf den Träger gebracht werden.

Im Falle der Aufbringung des Platins durch Tränkung mit einer platinhaltigen Lösung hängt die Dauer der Tränkung geringfügig von der verwendeten Platinverbindung, der Form und Porosität des verwendeten Trägers und vom Lösungsmittel ab. Sie beträgt vorzugsweise wenige Minuten bis einige Stunden, beispielsweise 0,01 bis 30 h, besonders bevorzugt 0,05 bis 20 h, ganz besonders bevorzugt 0,1 bis 15 h.

Während der Tränkung kann die Mischung gerührt werden. Es kann aber auch vorteilhaft sein, die Mischung stehenzulassen oder zu schütteln, damit gegebenenfalls verwendete Formkörper nicht durch einen Rührer beschädigt werden.

Nach der Tränkung sollte der Träger-Katalysator z.B. durch Filtrieren, Sedimentieren oder Zentrifugieren abgetrennt werden. Überschüssiges Lösungsmittel kann dabei durch Abdestillieren abgetrennt werden.

Nach der Tränkung werden die so erhaltenen Träger-Katalysatoren getrocknet. Dies kann an der Luft, im Vakuum oder im Gasstrom geschehen. Geeignete Gase für die Trocknung des Träger-Katalysators im Gasstrom sind z.B. Stickstoff, Sauerstoff, Kohlendioxid oder Edelgase sowie beliebige Mischungen der genannten Gase, bevorzugt z.B. Luft. Die Trocknung erfolgt bei vorzugsweise 20 bis 200°C, besonders bevorzugt bei 40 bis 180°C, ganz besonders bevorzugt bei 60 bis 150°C.

Die Trockenzeit hängt z.B. von der Porösität des verwendeten Trägers und vom verwendeten Lösungsmittel ab. Sie beträgt vorzugsweise einige Stunden, beispielsweise 0,5 bis 50 h, besonders bevorzugt 1 bis 40 h, ganz besonders bevorzugt 1 bis 30 h.

Nach der Trocknung können die getrockneten Träger-Katalysatoren calziniert werden. Dies kann an der Luft, im Vakuum oder im Gasstrom geschehen. Geeignete Gase für die Calzinierung des Träger-Katalysators im Gasstrom sind z.B. Stickstoff, Sauerstoff, Kohlendioxid oder Edelgase sowie beliebige Mischungen der genannten Gase, bevorzugt z.B. Luft. Die Calzinierung erfolgt vorzugsweise bei 100 bis 800°C, besonders bevorzugt bei 100 bis 700°C, ganz besonders bevorzugt bei 100 bis 600°C.

Die Calzinierungszeit beträgt vorzugsweise einige Stunden, beispielsweise 0,5 bis 50 h, bevorzugt 1 bis 40 h, besonders bevorzugt 1 bis 30 h.

Die Träger-Katalysatoren können als Pulver oder Formkörper eingesetzt werden und aus der Reaktionsmischung z.B. durch Filtration, Sedimentation oder Zentrifugieren abgetrennt werden.

Gegenstand der vorliegenden Erfindung sind zudem organisch-anorganische Hybridmaterialien, erhältlich durch die Umsetzung der erfindungsgemäßen Carbosilan-Dendrimere gemäß Formel I

R₄₋ᵢSi[(CH₂)ₙSiXₐR₃₋ₐ]ᵢ (I)

mit i = 3,4, bevorzugt i = 4, n = 2-6, bevorzugt n = 2 und R = Alkyl und/oder Aryl, wobei n innerhalb des Moleküls gleich oder ungleich sein kann und wobei die weiteren Reste die folgende Bedeutung haben
a) X = OH
   mit a = 1
   oder
b) X = [(CH₂)ₙSi(OH)R₂]
   mit a = 1 bis 3, bevorzugt a = 3
   oder
c) X = [(CH₂)ₙSiR₃₋ₐ[(CH₂)ₙSi(OH)R₂]ₐ]
   mit a = 1 - 3, bevorzugt a = 3,
   oder
d) X = [(CH₂)ₙSiR₃₋ₐ[(CH₂)ₙSiR₃₋ₐ[(CH₂)ₙSi(OH)R₂]ₐ]ₐ]
   mit a = 1 - 3, bevorzugt a = 3,
   mit Metallalkoxiden der Formel

   M(OR')ₓ
mit M = Si, Ge, Sn, B, Al, Ga, In, Ti, Zr, Hf, V, Nb oder Ta, R' = ein unverzweigter oder verzweigter C₁-C₅-Alkylrest und x, entsprechend der Oxidationsstufe von M, 3 oder 4 bedeutet, mit Wasser und in Gegenwart eines Katalysators.

Die Alkylreste R im Sinne der Erfindung sind vorzugsweise lineare oder verzweigte, gegebenenfalls substituierte C₁-C₅-Alkylreste.

Die Arylreste im Sinne der Erfindung sind vorzugsweise gegebenenfalls substituierte C₆-Ringe.

In einer bevorzugten Ausführungsform der vorliegenden Erfindung sind die Werte an der Indicis n innerhalb des Moleküls gleich. Besonders bevorzugt ist n = 2 und i = 4.

In einer bevorzugten Ausführungsform der vorliegenden Erfindung ist M = Si, Al, Ti oder Zr, R' ein unverzweigter oder verzweigter Alkylrest und x, entsprechend der Oxidationsstufe von M, 3 oder 4.

Besonders bevorzugt entspricht das Metallalkoxid der Formel Si(OEt)₄.

Katalysatoren im Sinne der Erfindung sind anorganische oder organische Säuren, bevorzugt organische Säuren oder metallorganische Verbindungen, wie z.B. Zinkoctat.

Die Konzentration des Katalysators in der Gesamtmischung beträgt vorzugsweise 0,1 bis 5 mol/l, besonders bevorzugt 0,1 bis 1,0 mol/l.

In einer bevorzugten Ausführungsform der vorliegenden Erfindung erfolgt die Umsetzung der funktionellen Carbosilan-Dendrimere der Formeln Ia bis Id mit dem Metallalkoxid in Gegenwart eines Katalysators in einem Lösungsmittel.

Das Verhältnis von Carbosilan-Dendrimer zu Metallalkoxid ist durch die Anzahl der Silanolgruppen bestimmt. Je Mol Silanolgruppe können 1 bis 4 Mol, bevorzugt ein Mol des Metallalkoxids eingesetzt werden.

Gegenstand der vorliegenden Erfindung ist zudem ein Verfahren zur Herstellung von Lacken, dadurch gekennzeichnet, daß Carbosilan-Dendrimere der Formel (I)

R₄₋ᵢSi[(CH₂)ₙSiXₐR₃₋ₐ]ᵢ (I)

mit i = 3,4, bevorzugt i = 4, n = 2-6, bevorzugt n = 2 und R = Alkyl und/oder Aryl, wobei n innerhalb des Moleküls gleich oder ungleich sein kann und wobei die weiteren Reste die folgende Bedeutung haben
a) X = OH
   mit a = 1
   oder
b) X = [(CH₂)ₙSi(OH)R₂]
   mit a = 1 bis 3, bevorzugt a = 3
   oder
c) X = [(CH₂)ₙSiR₃₋ₐ[(CH₂)ₙSi(OH)R₂]ₐ]
   mit a = 1 - 3, bevorzugt a = 3
   oder
d) X = [(CH₂)ₙSiR₃₋ₐ[(CH₂)ₙSiR₃₋ₐ[(CH₂)ₙSi(OH)R₂]ₐ]ₐ]
   mit a = 1 - 3, bevorzugt a = 3,
   mit Metallalkoxiden der Formel

   M(OR')ₓ
mit M = Si, Ge, Sn, B, Al, Ga, In, Ti, Zr, Hf, V, Nb oder Ta, besonders bevorzugt Si, Al, Ti, R' = ein unverzweigter oder verzweigter C₁-C₅-Alkylrest und x, entsprechend der Oxidationsstufe von M, 3 oder 4 bedeutet, mit Wasser und in Gegenwart eines Katalysators in einem Lösungsmittel umgesetzt werden.

Die Alkylreste R im Sinne der Erfindung sind vorzugsweise lineare oder verzweigte, gegebenenfalls substituierte C₁-C₅-Alkylreste.

Die Arylreste im Sinne der Erfindung sind vorzugsweise gegebenenfalls substituierte C₆-Ringe.

In einer weiteren bevorzugten Ausführungsform der vorliegenden Erfindung sind die Werte an der Indicis n innerhalb des Moleküls gleich. Besonders bevorzugt ist n = 2 und i = 4.

In einer bevorzugten Ausführungsform der vorliegenden Erfindung ist M = Si, Al, Ti oder Zr, R' ein unverzweigter oder verzweigter Alkylrest und x, entsprechend der Oxidationsstufe von M, 3 oder 4.

Besonders bevorzugt entspricht das Metallalkoxid der Formel Si(OEt)₄.

Katalysatoren im Sinne der Erfindung sind vorzugsweise anorganische oder organische Säuren, bevorzugt organische Säuren oder metallorganische Verbindungen, wie z.B. Zinkoctat.

Die Konzentration des Katalysators in der Gesamtmischung beträgt vorzugsweise 0,1 bis 5 mol/l, besonders bevorzugt 0,1 bis 1,0 mol/l.

In einer bevorzugten Ausführungsform der vorliegenden Erfindung erfolgt die Umsetzung der funktionellen Carbosilan-Dendrimere der Formeln Ia bis Id mit dem Metallalkoxid in Gegenwart eines Katalysators in einem Lösungsmittel.

Das Lösungsmittel sorgt nicht nur für eine homogene Lösung, sondern kann in erheblichem Maße auch Einfluß auf die Reaktionsgeschwindigkeit haben. Die Gelbildung sollte genügend langsam sein, um die Lacklösung einige Stunden verarbeiten zu können. Lösungsmittel im Sinne der Erfindung sind z.B. Alkohole. Bevorzugt sind wäßrige Alkohole. Besonders bevorzugt seien Ethanol oder Isopropanol mit einem Wassergehalt von 5 bis 25 %, bevorzugt 20 %, genannt.

Das Verhältnis von Carbosilan-Dendrimer zu Metallalkoxid ist durch die Anzahl der Silanolgruppen bestimmt. Je Mol Silanolgruppe können 1 bis 4 Mol, bevorzugt ein Mol des Metallalkoxids eingesetzt werden.

Das erfindungsgemäße Verfahren wird vorzugsweise so durchgeführt, daß das Carbosilan-Dendrimer gemäß einer der Formeln Ia bis Id in der geeigneten Menge wäßrigen Alkohols gelöst oder suspendiert und mit dem Metallalkoxid versetzt wird. Anschließend wird der Katalysator zugegeben, woraufhin eine gegebenenfalls vorliegende Suspension in wenigen Minuten homogen wird. Durch Verteilen eines Tropfens der Lacklösung auf einem Objektträger kann nun festgestellt werden wann die Viskosität für eine gute Verarbeitung hoch genug ist.

Gegenstand der vorliegenden Erfindung ist zudem die Verwendung der erfindungsgemäßen Si-OH-funktionellen Carbosilan-Dendrimere als Träger zur Anbindung von katalytisch aktiven Metallverbindungen.

Gegenstand der vorliegenden Erfindung ist auch die Verwendung der erfindungsgemäßen funktionellen Carbosilan-Dendrimere mit O-Metallbindung als Lacke.

Der Lack kann nach den üblichen Methoden auf die verschiedensten Oberflächen aufgetragen werden. Beispielsweise kann er mittels eines Rakels aufgetragen oder durch Eintauchen (dip coating) in die Lacklösung, woraus sehr dünne Schichten (einige µm) resultieren.

Die auf die Oberfläche aufgebrachte Lacklösung wird bevorzugt bei geeigneter Temperatur an der Luft ausgehärtet.

Bevor eine forcierte Trocknung bei höherer Temperatur erfolgt, wird vorzugsweise der Hauptanteil der flüchtigen Bestandteile bei Raumtemperatur evaporiert.

Geeignete Temperaturen zur Aushärtung der Lackfilme liegen im Temperaturbereich von 15°C bis 250°C. Bei Naßfilmdicken von 120 µm und mehr wird eine vollständige Aushärtung bei Raumtemperatur erst nach Tagen erreicht. Bevorzugt ist hier ein Temperaturbereich von 50°C bis 120°C, der eine Aushärtung in wenigen Stunden gewährleistet.

Das Eigenschaftsprofil wird im folgenden anhand eines Lacks aus Si[(CH₂)₂Si(OH)Me₂]₄ und Si(OEt)₄ (1:4) genauer beschrieben.

Die so hergestellten Lackfilme sind absolut transparent und haben einen hohen Glanz. Die Extinktion ist im Bereich von 360 bis 560 nm kleiner 0,002 und im Bereich von 560 bis 810 nm etwa 0,03.

Die Bestimmung der Kratzfestigkeit via Bleistifthärte nach ASTM 3363 zeigt, daß ein 27 µm Film auf einer Glasoberfläche, der 24h bei 20°C ausgehärtet wurde, nicht durch einen Bleistift der Härte 5H geritzt werden kann. Zum gleichen Ergebnis kommt man bei einer entsprechend beschichteten Stahlplatte.

Die Haftung der Beschichtungen wurde gemäß ISO 2409 überprüft. Sowohl auf Glas als auch auf Stahl, Eisen, Aluminium oder Silicium wurde dabei die bestmögliche Klassifikation "0" erreicht.

Die Lösungsmittelbeständigkeit wurde durch fünfminütiges, kräftiges Reiben der Beschichtung mit einem lösungsmittelgetränkten Wattebausch geprüft. Durch keine der verwendeten Lösungsmittel Ethanol, Aceton, Dimethylformamid, Toluol, Chloroform oder n-Butylacetat wurde der Lack in irgendeiner Art und Weise verändert.

Die thermogravimetrische Analyse (TGA) unter Luft zeigt keinen Masseverlust bis 210°C, d.h. der Film ist zumindest für kurze Zeit bis zu dieser Temperatur thermisch stabil. Oberhalb von 210°C beobachtet man einen Masseverlust von ca. 10%, der hauptsächlich von austretendem Lösungsmittel oder einer Nachvernetzung herrührt. Erst zwischen 230°C und 450°C erfolgt die Zersetzung (Oxidation) des organischen Anteils.

Wie die TGA unter Stickstoff zeigt, erfolgt bis 235°C ein Masseverlust von ca. 4%, zwischen 235°C und 490°C lediglich von ca. 3%. Dieser Masseverlust kann nur auf Bestandteile zurückgeführt werden, die im Lack eingeschlossen sind (z.B. Lösungsmittel) oder durch Nachvernetzung bei dieser Temperatur gebildet werden. Herausragend ist, daß der Film selbst zumindest kurzfristig unzersetzt bis 490°C thermisch belastet werden kann. Oberhalb 490°C wird der organische Anteil in der Beschichtung abgebaut.

Überraschend ist auch die aus Randwinkelmessungen bestimmte Oberflächenspannung von 28,5 mN/m, wobei der unpolare Anteil 25,0 mN/m und der polare Anteil 3,4 mN/m beträgt. Der unpolare Anteil überwiegt stark, was bei einem System mit vielen Siloxan- und Silanolgruppen ungewöhnlich ist. Das Carbosilangerüst hat demnach großen Einfluß auf diese Parameter.

Auch der thermische Ausdehnungskoeffizient ist mit 63x10⁻⁶/K überraschend hoch. Herkömmliche Gele ergeben selbst bei Verwendung von Silanen mit hohem organischen Anteil, wie z.B. N-Octylgruppen, nur Ausdehnungskoeffizienten im Bereich von 1 bis 22x10⁻⁶/K, wie in Mat. Res. Symp. Proc. 1988, 121, 811-816 beschrieben.

Der bei dem erfindungsgemäßen Lackfilm ermittelte Ausdehnungskoeffizient stimmt mit dem von z.B. Polycarbonat (ca. 60x10⁻⁶/K) sehr gut überein. Aus der Oberflächenspannung folgt, daß auch die Benetzung von Kunststoffen zufriedenstellend gelingen sollte.

Die mechanische Prüfung eines auf ein Eisenblech aufgetragenen Lackfilms ergibt einen Wert von 11 mm für eine langsame Deformation (Tiefungsprüfung gemäß ISO 1520). Dieser ausgezeichnete Wert ist ein Beleg für die Elastizität des Lackfilms.

Bei schneller Deformation (Kugelschlag gemäß ASTM D 2794-93) wird ein Wert von 20 inch-pound erreicht.

Das erfindungsgemäße Verfahren wird durch die nachfolgenden Beispiele näher erläutert.

Die Erfindung ist jedoch nicht auf die Beispiele beschränkt.

### Ausführungsbeispiele:

### Vorbemerkung:

Alle Reaktionen wurden mittels Schlenk-Technik unter Argon oder im Vakuum durchgeführt. Alle verwendeten Lösungsmittel wurden nach den üblichen Labormethoden vor Gebrauch getrocknet und unter Argon destilliert eingesetzt. Käufliche Edukte wurden keiner weiteren Reinigung unterzogen.

¹H-NMR-Spektren wurden bei 400 bzw. 500 MHz, protonenentkoppelte ¹³C-Spektren bei 100 MHz mit dem AMX 500 der Firma Bruker aufgenommen. Das Spektrometer Varian XR 300 der Firma Varian wurde bei 60 MHz für die Aufnahme protonenentkoppelter ²⁹Si-Spektren benutzt. Die Massenspektren wurden bei Maldi-Messungen mit Kratos Maldi 3 der Firma Shimatzu und bei CI-Messungen mit MAT 800/230 der Firma Finnigan angefertigt.

Käufliche Edukte, wie Chlordimethylsilan und Tetravinylsilan, wurden ohne weitere Reinigung eingesetzt. Die Reinheit des eingesetzten Tetravinylsilans betrug 96 %.

Die Synthese von Si[(CH₂)₂Si[(CH₂)₂Si(C₂H₃)₃]₃]₄ wurde vorgenommen, wie sie in Organometallics 1994, 13, 2682 beschrieben ist.

Die Synthese von Phenyltrivinylsilan aus Phenyltrichlorsilan und Vinylmagnesiumchlorid wurde vorgenommen, wie sie in J. Org. Chem. 1957, 22, 1200-1202 beschrieben ist.

Als Hydrosilylierungskatalysator wurde eine 0,1 %ige Lösung von Hexachloroplatinsäure in absolutem Isopropanol eingesetzt.

### Beispiel 1: Synthese von Si[(CH₂)₂SiClMe₂]₄

Zu einer Mischung aus 5 g (36,7 mmol) Tetravinylsilan, 20,8 g (220,1 mmol) Chlorodimethylsilan und 20 ml THF wurden bei Raumtemperatur 5 Tropfen des Platin-Katalysators gegeben.. Man rührte nun zunächst 30 min bei Raumtemperatur und erwärmte auf 45°C bis 50°C. Nach einigen Minuten setzte eine heftige exotherme Reaktion ein, wobei das Heizbad unter Umständen entfernt werden mußte. Bei sinkender Temperatur, wurde noch weitere 2 h auf 45°C bis 50°C erwärmt. Nach dem Abkühlen auf Raumtemperatur wurden weitere 20h gerührt und alle flüchtigen Bestandteile im Vakuum entfernt. Man erhielt das Produkt als farbloses Wachs.
NMR: (CDCl₃)
¹H: δ = 0,42 ppm (s, 6H, SiCH₃); 0,59 ppm und 0,68 ppm (m, je 2H, SiCH₂).
¹³C{¹H}: δ = 0,93 ppm (s, SiCH₃); 2,06 ppm (s, SiCH₂); 11,26 ppm (s, ClSiCH₂).

### Beispiel 2: Synthese von Si[(CH₂)₂Si[(CH₂)₂SiClMe₂]₃]₄

Zu der Reaktionsmischung bestehend aus 3 g (5,20 mmol) Si[(CH₂)₂Si(C₂H₃)₃]₄, 7,8 g Chlorodimethylsilan und 20 ml THF gab man 5 Tropfen des Platin-Katalysators und rührte zunächst 30 min bei Raumtemperatur. Man erwärmte dann auf 45°C bis 50°C; die nach einigen Minuten einsetzende Reaktion war wesentlich weniger exotherm als die in Beispiel 1 beschriebene. Danach erwärmte man 2h auf 45°C, kühlte dann emeut auf Raumtemperatur ab und rührte weitere 20h. Nach dem Entfernen der flüchtigen Bestandteile im Vakuum erhielt man das Produkt als farblosen Feststoff.

| Elementaranalyse (C, H): | | |
|---|---|---|
| | C | H |
| Ber.: | 39,28 % | 8,00 % |
| Gef.: | 40,0 % | 8,0 % |

C₅₆H₁₃₆Cl₁₂Si₁₇
M=1712,580 g/mol
NMR: (CDCl₃)
¹H: δ = 0,39 ppm (s, 22H, Si(CH₃)₂ und Si(CH₂)₂Si); 0,60 ppm (m, 12H, Si(CH₂)₂SiCl).
¹³C{¹H}: δ = 1,00 ppm (s, SiCH₃); 1,97 ppm, 2,29 ppm und 2,82 ppm (s, SiCH₂); 11,47 ppm (s, ClSiCH₂).

### Beispiel 3: Synthese von Si[(CH₂)₂Si(OH)Me₂]₄

Zu 8,5 g (84,0 mmol) Triethylamin und 1,62 g (90,0 mmol) Wasser in 300 ml Diethylether tropfte man innerhalb von 30 min eine Lösung von 10,0 g (19,5 mmol) Si[(CH₂)₂SiClMe₂]₄ aus Beispiel 1 in 20 ml Diethylether. Das gebildete Triethylaminhydrochlorid fiel dabei als weißer Niederschlag an. Nach der Zugabe rührte man noch 1h und filtrierte dann den Feststoff ab. Das Filtrat wurde im Vakuum vom Lösungsmittel befreit. Der so erhaltene farblose Feststoff wurde in THF gelöst und langsam unter kräftigem Rühren in 500 ml Hexan getropft. Das Produkt fiel dabei als feiner, weißer Niederschlag an, welcher nach Abfiltrieren und einmaligem Waschen mit Hexan nicht mehr weiter gereinigt werden mußte.

Es wurde ein stabiler Feststoff erhalten.

Schmp.: 144°C.

| Elementaranalyse: | | | | |
|---|---|---|---|---|
| | C | H | O | Si |
| Ber.: | 43,58 % | 10,06 % | 14,51 % | 31,85 % |
| Gef.: | 43,6 % | 10,1 % | 14,2 % | 32,1 % (Diff.) |

C₁₆H₄₄O₄Si₅
M = 440,951 g/mol
NMR: (DMSO-d₆)
¹H: δ = 0,0 ppm (s, 6H, SiCH₃); 0,39 ppm (m, 4H, Si(CH₂)₂Si); 5,21 ppm (s, 1H, SiOH).
¹³C{¹H}: δ = -0,63 ppm (s, SiCH₃); 1,93 ppm (s, Si(CH₂)₄); 9,77 ppm (s, Si(OH)CH₂).
²⁹Si{¹H}: δ = 14,26 ppm (s, Si(CH₂)₄); 16,33 ppm (s, SiOH).
MS: (CI)
m/e = 337 (Si[(CH₂)₂Si(OH)Me₂]₃⁺)
IR: (Nujol-Verreibung)
3160 cm⁻¹, sehr breit (υO-H).

### Beispiel 4: Synthese von Si[(CH₂)₂Si[(CH₂)₂Si(OH)Me₂]₃]₄

Zu einer Mischung von 20,7 g (30,4 mmol) Triethylamin, 3,65 g (32,7 mmol) Wasser und 700 ml Diethylether wurden innerhalb von 30 min 4 g (2,34 mmol) Si[(CH₂)₂Si[(CH₂)₂SiClMe₂]₃]₄ aus Beispiel 2 in 40 ml Diethylether getropft. Nach vollständiger Zugabe rührte man die Reaktionsmischung noch 1h und filtrierte dann den Niederschlag von Triethylaminhydrochlorid ab. Das Filtrat wurde im Vakuum von flüchtigen Bestandteilen befreit und der teilkristalline farblose Rückstand in THF aufgenommen. Diese Lösung wurde in 300 ml Hexan getropft. So erhielt man das Produkt als farblosen Niederschlag. Als dieser beim Stehenlassen ölig wurde, dekantierte man das Lösungsmittel ab und rührte das ölige Produkt mit etwas Diethylether. Das nachgereinigte feinkristalline Produkt wurde abfiltriert und im Vakuum getrocknet.

Es wurde ein stabiler Feststoff erhalten.

| Elementaranalyse (C, H): | | |
|---|---|---|
| | C | H |
| Ber.: | 45,10 % | 10,00 % |
| Gef.: | 44,8 % | 9,7 % |

C₅₆H₁₄₈O₁₂Si₁₇
M = 1491,239 g/mol
NMR: (DMSO-d₆)
¹H: δ = 0,06 ppm (s, 18H, SiCH₃); 0,46 ppm (m, 16H, SiCH₂); 5,31 ppm (s, 3H, SiOH).
¹³C{¹H}: δ = -0,42 ppm (s, SiCH₃); 1,89 ppm (s, Si(OH)CH₂CH₂Si); 2,23 ppm und 2,43 ppm (s, Si(CH₂)₂Si), 9,99 ppm (s, Si(OH)CH₂CH₂Si).

### Beispiel 5:Synthese von C₆H₅Si[(CH₂)₂SiClMe₂]₃

Zu 12,3 g (66,1 mmol) Phenyltrivinylsilan in 50 ml THF gab man 25,0 g (264,5 mmol) Chlordimethylsilan und einige Tropfen des Pt-Katalysators. Man erwärmte die Reaktionsmischung 20h auf 45-50°C, kühlte dann auf Raumtemperatur ab und entfernte alle flüchtigen Bestandteile im Vakuum. Man erhielt ein farbloses Öl, welches ohne weitere Reinigung nach Beispiel 6 weiter umgesetzt wurde.

### Beispiel 6: Synthese von C₆H₅Si[(CH₂)₂Si(OH)Me₂]₃

Zu einer Lösung von 34,5 ml (247,7 mmol) Triethylamin und 4,8 ml (264,9 mmol) Wasser in 1,2 l tert. Butylmethylether tropfte man innerhalb von 2h 26,9 g (57,4 mmol) C₆H₅Si[(CH₂)₂SiClMe₂]₃ aus Beispiel 5 in 30 ml Diethylether. Nach der Zugabe rührte man noch eine Stunde bei Raumtemperatur und filtrierte dann den weißen Niederschlag von Triethylaminhydrochlorid ab. Das farblose Filtrat wurde am Rotationsverdampfer von flüchtigen Bestandteilen befreit. Der so erhaltene weiße Feststoff wurde in 30 ml THF gelöst und unter Rühren in 400 ml Hexan getropft. Das Produkt fiel als feiner weißer Niederschlag aus. Dieser wurde abgesaugt, zweimal mit 50 ml Hexan gewaschen und schließlich 20h im dynamischen Vakuum getrocknet. Es wurde ein stabiler Feststoff erhalten.

| Elementaranalyse (C, H): | | |
|---|---|---|
| | C | H |
| Ber.: | 52,11 % | 9,23 % |
| Gef.: | 52,3 % | 8,7 % |

C₁₈H₃₈O₂Si₄
M = 414,840 g/Mol
NMR: (DMSO-d₆)
¹H: δ = -0,11 ppm (s, 18H, SiCH₃); 0,32 ppm und 0,70 ppm (m, je 6H, SiCH₂); 5,27 ppm (s, 3H, SiOH); 7,35 ppm und 7,44 ppm (m, 5H, SiC₆H₅).
¹³C{¹H}: δ = -0,43 ppm (s, SiCH₃); 2,52 ppm (s, Si(CH₂)₄); 9,91 ppm (s, Si(OH)CH₂); 127,85 ppm, 128,84 ppm, 134,19 ppm und 137,32 ppm (s, SiC₆H₅).

### Beispiel 7: Synthese von Si[(CH₂)₂Si(OH)Me₂]₄ in tert. Butylmethylether

94,3 g (183,4 mmol) Si[(CH₂)₂SiClMe₂]₄ wurden in 100 ml Diethylether gelöst und bei Raumtemperatur unter kräftigem Rühren zu einer Lösung von 110,3 ml (792,3 mmol) Triethylamin, 15,3 ml (850 mmol) Wasser und 3 630 ml tert. Butylmethylether getropft. Das sich bildende Triethylaminhydrochlorid fiel sofort als weißer Feststoff aus. Das Zutropfen erfolgte so rasch, daß die Reaktions-temperatur zwischen 25°C und 30°C lag. Nach vollständiger Zugabe wurde noch eine Stunde weitergerührt und dann der Niederschlag über eine Fritte abfiltriert. Nach dem Entfernen der flüchtigen Bestandteile im Vakuum bei ca. 35°C erhielt man das Rohprodukt als weißen Feststoff. Dieser wurde in so wenig wie möglich THF aufgenommen und unter kräftigem Rühren in 3 l Hexan getropft. Der so erhaltene feine, weiße Niederschlag wurde abfiltriert, einmal mit Hexan gewaschen und dann im Vakuum getrocknet.

Der nach obiger Umsetzung anfallende tert. Butylmethylether wurde ohne weitere Reinigung für eine zweite, analoge Reaktion eingesetzt. Der Reaktionsverlauf, sowie die Qualität des Feinproduktes blieben dabei unverändert.

### Allgemeine Vorschrift zur Herstellung von Lacklösungen

Zu den Carbosilan-Dendrimeren Si[(CH₂)₂Si(OH)Me₂]₄, Ph-Si[(CH₂)₂Si(OH)Me₂]₃ oder Si[(CH₂)₂Si[(CH₂)₂Si(OH)Me₂]₃]₄ in dem entsprechenden Lösungsmittel gab man Tetraethoxysilan (TEOS) und schließlich den Katalysator Ameisensäure. Die Reaktionsmischung wurde solange gerührt bis sie absolut klar war, und dann stehengelassen bis eine gute Verarbeitbarkeit gegeben ist. Die genauen Versuchsdaten zur Herstellung der Lacklösungen 1 bis 6 sind in der Tabelle 1 zusammengefaßt. Die Mol-, Volumenverhältnisse und Konzentrationen der verwendeten Stoffe sind in Tabelle 2 zusammengefaßt.

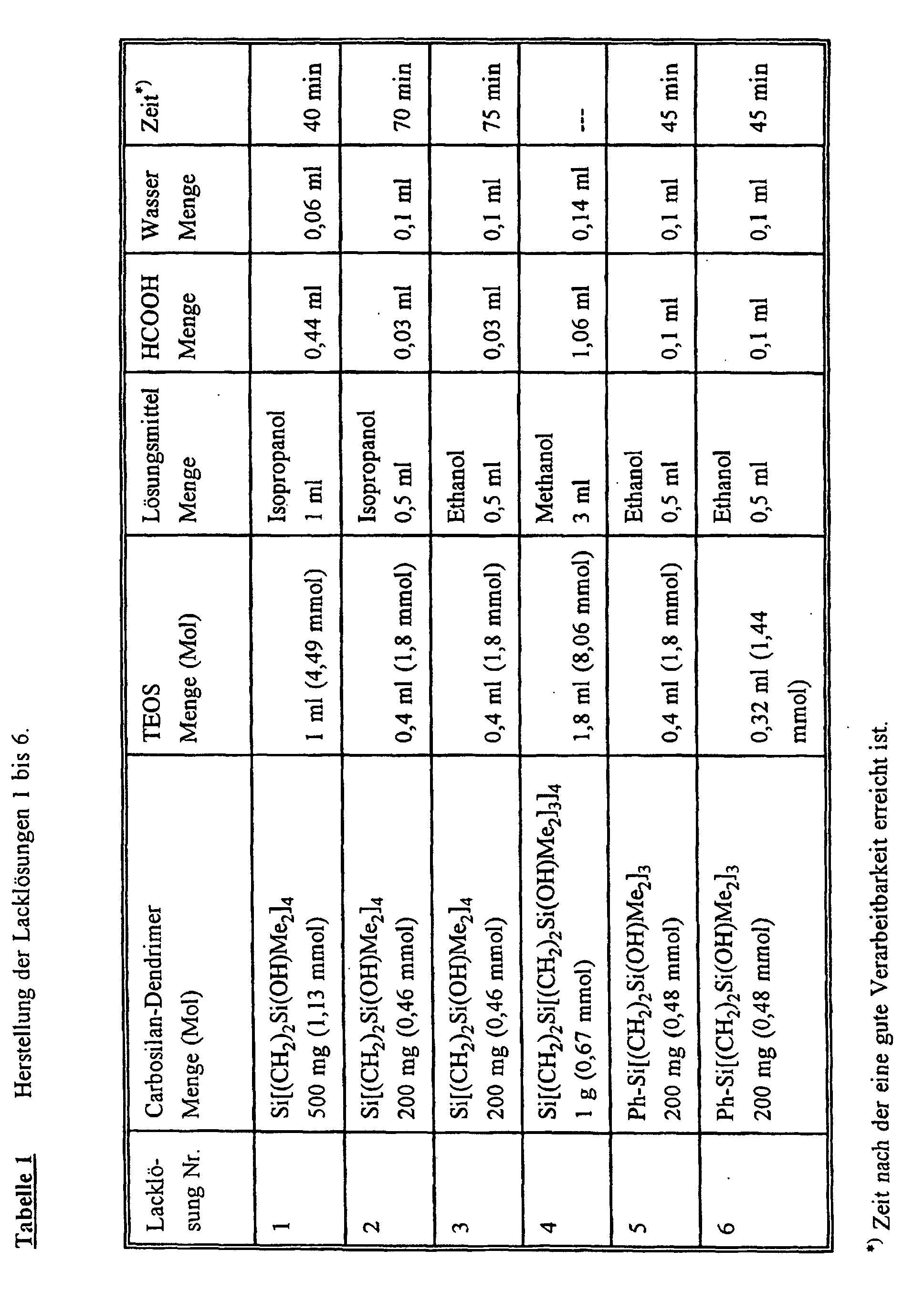

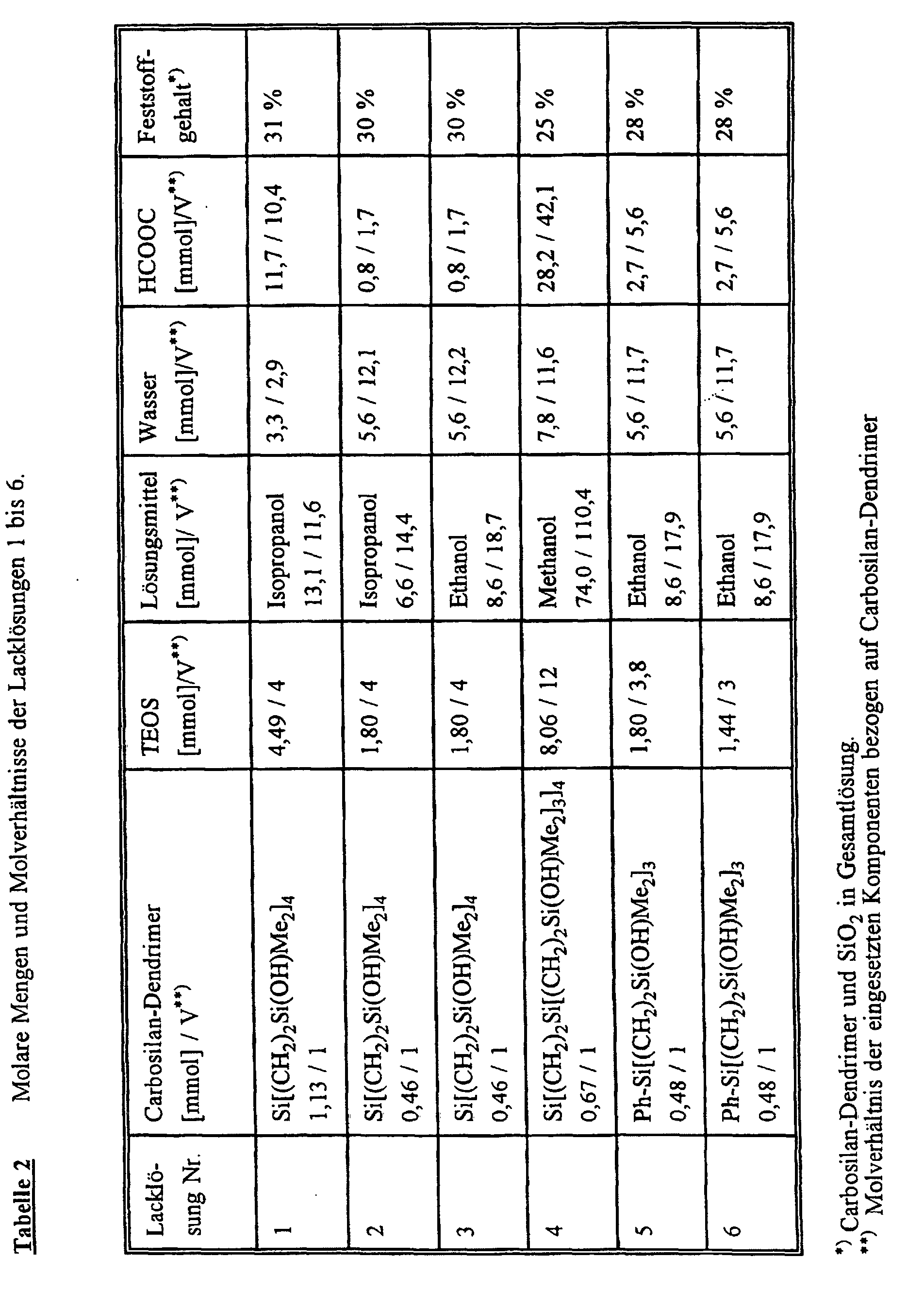

### Allgemeine Vorschrift zur Herstellung von Lackfilmen

Vor der Beschichtung wurden alle Oberflächen sorgfältig durch Abreiben mit Aceton gereinigt. Die ungefähr notwendige Menge der jeweiligen Lacklösung 1 bis 6 wurde dann mit einem Vierfach-Filmziehrahmen der Firma Erichsen, Modell 360, auf die Oberfläche aufgetragen. Die verwendeten Oberflächen hatten die folgenden Maße:

**Tabelle 3**

| Maße der verwendeten Oberflächen. | |
|---|---|
| Glas | 80x115x2,77 mm |
| Eisen | 65x210x0,48 mm |
| Aluminium | 80x150x2,00 mm |
| Stahl | 80x150x1,47 mm |
| Silicium | 114x114x0,38 mm |

Die Angaben über die Art der Oberflächen, Filmdicken und Trocknungsbedingungen sind in Tabelle 4 zusammengefaßt. Die Ergebnisse der Prüfungen der Bleistifthärte, des Gitterschnittests und der Lösungsmittelbeständigkeit finden sich in Tabelle 5. Physikalisch-chemische Eigenschaften von aus der Lacklösung 1 präparierten Filme sind in Tabelle 6 angegeben, während die mechanischen Eigenschaften des Lackfims 1/5 in Tabelle 7 gezeigt sind.

**Tabelle 4**

| Herstellung von Lackfilmen aus den Lacklösungen 1,2,3,5 und 6. (Die Lacklösung 4 wurde in einem Kunststoffgefäß zu einem Formkörper/Film mit 0,8 mm Dicke ausgehärtet). | | | | |
|---|---|---|---|---|
| Lacklösung/-film Nr. | Oberfläche | Naßfilmdicke | Trockenfilmdicke | Trocknungsbedingungen |
| 1/1 | Glas | 120 µm | 27 µm | 24h R.T. |
| 1/2 | Glas | 120 µm | 22 µm | 3h R.T., 2h 105°C, 19h R.T. |
| 1/3 | Glas | 240 µm | 64 µm | 24h R.T. |
| 1/4 | Glas | 240 µm | 33 µm | 3h R.T., 2h 105°C, 19h R.T. |
| 1/5 | Eisen | 120 µm | 9 µm | 24h R.T. |
| 1/6 | Eisen | 120 µm | 8 µm | 3h R.T., 1h 50 °C, 4h 80°C |
| 1/7 | Eisen | 120 µm | 10 µm | 24h R.T., 2h 105°C |
| 1/8 | Eisen | 240 µm | 38 µm | 24h R.T. |
| 1/9 | Eisen | 240 µm | 39 µm | 3d 60°C, 2h R.T. |
| 1/10 | Aluminium | 120 µm | 23 µm | 24h R.T. |
| 1/11 | Aluminium | 120 µm | 19 µm | 17h R.T., 2h 105°C |
| 1/12 | Stahl | 120 µm | 18 µm | 24h R.T. |
| 1/13 | Stahl | 120 µm | 18 µm | 17h R.T, 2h 105°C |
| 1/14 | Silicium | 120 µm | 4 µm | 24h R.T. |
| 2/15 | Glas | 120 µm | 15 µm | 20d R.T. |
| 3/16 | Glas | 120 µm | 34 µm | 20d R.T. |
| 5/17 | Glas | 120 µm | 10 µm | 15d R.T. |
| 6/18 | Glas | 120 µm | 9 µm | 15d R.T. |

**Tabelle 5**

| Vorprüfungen der Lackfilme 1 bis 18. | | | |
|---|---|---|---|
| Lackfilm-Nr. | Bleistifthärte nach ASTM D 3363 | Gitterschnittest nach ISO 2409 | Lösungsmittelbeständigkeit^{*)} Aceton, Toluol, CHCl₃, Ethanol, n-Butylacetat, DMF |
| 1 | > 5H | 0-1 | keine Veränderung |
| 2 | > 5H | 0-1 | keine Veränderung |
| 3 | > 5H | 0-1 | keine Veränderung |
| 4 | > 5H | 0-1 | keine Veränderung |
| 5 | n.a. | 0-1 | keine Veränderung |
| 6 | n.a. | 0-1 | keine Veränderung |
| 7 | n.a. | 0-1 | keine Veränderung |
| 8 | n.a. | 0-1 | keine Veränderung |
| 9 | n.a. | 0-1 | keine Veränderung |
| 10 | n.a. | 1 | keine Veränderung |
| 11 | n.a. | 0-1 | keine Veränderung |
| 12 | > 5H | 0-1 | keine Veränderung |
| 13 | > 4H | 0-1 | keine Veränderung |
| 14 | n.a. | 0-1 | keine Veränderung |
| 15 | > 5H | 0-1 | keine Veränderung |
| 16 | > 5H | 0-1 | keine Veränderung |
| 17 | > 5H | 0-1 | keine Veränderung |
| 18 | > 5H | 0-1 | keine Veränderung |

| | | | |
|---|---|---|---|
| *) Geprüft durch fünfminütiges Reiben der Lackfilme mit einem lösungsmittelgetränkten Wattebausch oder durch Eintauchen der Oberfläche in das Lösungsmittel. n.a. = Prüfung nicht anwendbar bei rauhen oder weichen Oberflächen (verwendete Eisen- und Aluminiumplatten) | | | |

**Tabelle 6**

| Physikalisch-chemische Eigenschaften von Lackfilmen der Lacklösung 1. | |
|---|---|
| | Lackfilme aus Lacklösung 1 |
| Rauhigkeit, R_{A}-Wert | 31 nm +/- 5 nm |
| Rauhigkeit, R_{A}-Wert (nach Reinigung) | 21 nm +/- 4nm |
| Oberflächenspannung | 28,5 mN/m |
| Oberflächenspannung (nach Reinigung) | 28,7 mN/m |
| Temperaturbeständigkeit (Luft) | 210-230°C^{*)} |
| Temperaturbeständigkeit (N₂) | 490°C^{*)} |
| Extinktion im UV/Vis-Bereich | |
| 360 bis 560 nm | < 0,002 |
| 560 bis 810 nm | ≤ 0,03 |
| Brechungsindex ( λ=633 nm) | 1,4642 +/- 0,0002 |

| | |
|---|---|
| *) Aus TGA, d.h. oberhalb dieser Temperatur erfolgt die Zersetzung des organischen Anteils. | |

**Tabelle 7**

| Mechanische Eigenschaften des Lackfilms 1/5. | |
|---|---|
| Tiefungsprüfung gemäß ISO 1520 | 11 mm |
| Kugelschlagprüfung gemäß ASTM D 2794 -93 | 20 inch-pound |

### Beispiel 8: Belegung von pulverförmiger Aktivkohle mit H₂PtCl₆ (Kat I)

49,5 g Aktivkohle Norit CN 1 wurden in 300 ml bidestilliertem Wasser aufgeschlämmt und mit 200 ml einer wässrigen H₂PtCl₆-Lösung, die 0,5 g Pt - gerechnet als Metall - enthielt, versetzt. Man rührte 10 Minuten nach und saugte den Katalyator auf einer Filternutsche ab. Das wasserfeuchte Rohprodukt (153 g) wurde bei 0,1 Pa und 110°C getrocknet und unter Argon gelagert. Der Katalysator Kat I enthielt 1 % Pt.

### Beispiel 9: Belegung von stückiger Aktivkohle mit H₂PtCl₆ (Kat II)

49,5 g (= 114,6 ml) Aktivkohle-Extrudate Norit ROX 0,8 wurden mit 33,9 ml einer wässrigen H₂PtCl₆-Lösung, die 0,5 g Pt - gerechnet als Metall - enthielt, getränkt. Das Rohprodukt wurde zunächst bei 110°C im Stickstoffstrom getrocknet, anschließend bei 0,1 Pa und 110°C getrocknet und unter Argon gelagert. Der Katalysator enthielt 1 % Pt.

### Beispiel 10: Belegung von pulverförmigen SiO₂ mit H₂PtCl₆ (Kat III)

49,5 g SiO₂ (Merck 657) wurden mit 132 ml einer wässrigen H₂PtCl₆-Lösung, die 0,5 g Pt - gerechnet als Metall - enthielt, angeteigt. Das wasserfeuchte Rohprodukt wurde zunächst bei 110°C im Trockenschrank getrocknet, anschließend bei 0,1 Pa und 110°C getrocknet und unter Argon gelagert. Der Katalysator enthielt 1 % Pt.

### Beispiel 11: Belegung von pulverförmigen Al₂O₃ mit H₂PtCl₆ (Kat IV)

49,5 g γ-Al₂O₃ (Rhone-Poulenc, SPH 509) wurden mit 40 ml einer wässrigen H₂PtCl₆-Lösung, die 0,5 g Pt - gerechnet als Metall - enthielt, angeteigt. Das wasserfeuchte Rohprodukt wurde zunächst bei 110°C im Trockenschrank getrocknet, anschließend bei 0,1 Pa und 110°C getrocknet und unter Argon gelagert. Der Katalysator enthielt 1 % Pt.

### Beispiel 12:Belegung von pulverförmigen TiO₂ mit H₂PtCl₆ (Kat V)

49,5 g TiO₂ (Bayer) wurden mit 70 ml einer wässrigen H₂PtCl₆-Lösung, die 0,5 g Pt - gerechnet als Metall - enthielt, angeteigt. Das wasserfeuchte Rohprodukt wurde zunächst bei 110°C im Trockenschrank getrocknet, anschließend bei 0,1 Pa und 110°C getrocknet und unter Argon gelagert. Der Katalysator enthielt 1 % Pt.

### Beispiel 13: Synthese von Si[(CH₂)₂SiClMe₂]₄ mit 5g Kat I

Zu 250 g (1,84 mol) Tetravinylsilan in 600 ml THF wurden 867 g (9,17 mol) Chlordimethylsilan und 5 g des getrockneten Katalysators Kat I gegeben. Unter kräftigem Rühren erwärmte man nun solange auf ca. 40°C, bis die deutlich exotherme Reaktion nach einigen Minuten einsetzte und entfernte dann die äußere Wärmequelle. Die Reaktion unterhielt sich ca. 30 min unter kräftigem Rückfluß selbst. Bei schwächer werdendem Rückfluß wurde nur noch 15h auf 55 bis 60°C erwärmt und anschließend auf Raumtemperatur abkühlt. Der geträgerte Katalysator wurde über eine Fritte abfiltriert. Die farblose Lösung wurde im Vakuum eingeengt. Das Produkt kristallisierte dabei spontan als farbloser Feststoff aus. Dieser wurde dann noch 20h im Vakuum getrocknet.

Ausbeute: 861,5 g entsprechend 92 % d. Th.

### Beispiel 14: Synthese von Si[(CH₂)₂SiClMe₂]₄ mit 4 g Kat I

Die Umsetzung erfolgte analog Beispiel 2, jedoch nur mit 4 g des geträgerten Katalysators Kat I. Das nach der Filtration abkondensierte Gemisch aus THF und überschüssigem Chlordimethylsilan wurde in Beispiel 3 erneut eingesetzt.

Ausbeute: 854,3 g entsprechend 91 % d. Th.

### Beispiel 15: Synthese von Si[(CH₂)₂SiClMe₂]₄ mit 4 g Kat I

Zu 250 g (1,84 mol) Tetravinylsilan und dem Kondensat aus Beispiel 3, bestehend aus THF und Chlordimethylsilan gab man 729 g (7,71 mol) Chlordimethylsilan und 4 g des getrockneten Katalysators Kat I. Unter kräftigem Rühren erwärmte man nun solange auf ca. 40°C, bis die deutlich exotherme Reaktion nach einigen Minuten einsetzte und entfernte dann die äußere Wärmequelle. Die Reaktion unterhielt sich ca. 60 min unter kräftigem Rückfluß selbst. Bei schwächer werdendem Rückfluß erwärmte man noch 15h auf 55 bis 60°C und kühlte dann auf Raumtemperatur ab. Jetzt filtrierte man den geträgerten Katalysator über eine Fritte ab und engte die farblose Lösung im Vakuum ein. Das Produkt kristallisierte dabei spontan als farbloser Feststoff aus. Dieser wurde dann noch 20h im Vakuum getrocknet.

Ausbeute: 849,0 g entsprechend 90 % d. Th.

### Beispiel 16: Synthese von Si[(CH₂)₂SiClMe₂]₄ mit Kat II

Zu 10 g (73,3 mmol) Tetravinylsilan in 30 ml THF gab man 34,7 g (366,7 mmol) Chlordimethylsilan und 200 mg des geträgerten Katalysators Kat II. Man erwärmte die Reaktionsmischung auf 40°C und entfernte nach dem Einsetzen der exothermen Reaktion die externe Wärmequelle. Die Temperatur stieg dann von selbst auf ca. 60°C an; nach Beendigung der exothermen Reaktion, erwärmte man noch 15 h auf 40°C und kühlte dann auf Raumtemperatur ab. Der Katalysator wurde abfiltriert und die farblose Lösung im Vakuum von flüchtigen Bestandteilen befreit. Man erhielt das Produkt als weißen Feststoff.

Ausbeute: 32,5 g entsprechend 86 % d.Th.

### Beispiel 17: Synthese von Si[(CH₂)₂SiClMe₂]₄ mit Kat III

Zu 10 g (73,3 mmol) Tetravinylsilan in 30 ml THF gab man 34,7 g (366,7 mmol) Chlordimethylsilan und 200 mg des geträgerten Katalysators Kat III. Man erwärmte die Reaktionsmischung auf 40°C und entfernte nach dem Einsetzen der exothermen Reaktion die externe Wärmequelle. Die Temperatur stieg dann von selbst auf ca. 65°C an; nach Beendigung der exothermen Reaktion, erwärmte man noch 2 h auf 50°C und kühlte dann auf Raumtemperatur ab. Der Katalysator wurde abfiltriert und die farblose Lösung im Vakuum von flüchtigen Bestandteilen befreit. Man erhielt das Produkt als weißen Feststoff.

Ausbeute: 34,6 g entsprechend 92 % d.Th.

### Beispiel 18: Synthese von Si[(CH₂)₂SiClMe₂]₄ mit Kat IV

Zu 25 g (183,4 mmol) Tetravinylsilan in 60 ml THF gab man 86,8 g (917,0 mmol) Chlordimethylsilan und 0,5 g des Katalysators Kat IV. Man erwärmte langsam auf 40°C, wobei nach ca. 30 min eine starke exotherme Reaktion einsetzte. Die Reaktionsmischung erwärmte sich dabei auf 65°C und mußte zwischenzeitlich mit einem Kältebad (Aceton/Trockeneis) gekühlt werden. Nach dem Ende der exothermen Reaktion erwärmte man noch 2h auf 50°C und rührte dann noch 20h bei Raumtemperatur. Der Katalysator wurde dann über eine Fritte abfiltriert und das Filtrat im Vakuum von flüchtigen Bestandteilen befreit.

Ausbeute: 80,8 g entsprechend 86 % d. Th.

### Beispiel 19: Synthese von Si[(CH₂)₂SiClMe₂]₄ mit Kat V

Zu 25 g (183,4 mmol) Tetravinylsilan in 60 ml THF gab man 86,8 g (917,0 mmol) Chlordimethylsilan und 0,2 g des Katalysators Kat V. Man erwärmte langsam auf 40°C und entfernte die externe Wärmequelle sobald die exotherme Reaktion einsetzte. Die Reaktionsmischung erwärmte sich dabei schnell bis 60°C. Nach dem Ende der exothermen Reaktion erwärmte man noch 2h auf 50°C und rührte dann noch 20h bei Raumtemperatur. Der Katalysator wurde dann über eine Fritte abfiltriert und das Filtrat im Vakuum von flüchtigen Bestandteilen befreit.

Ausbeute: 70 g entsprechend 74 % d. Th.

### Beispiel 20:

Synthese von Si[(CH₂)₂SiClMe₂]₄ mit Kat I in tert. Butylmethylether

Zu 125 g (0,92 mol) Tetravinylsilan in 300 ml tert. Butylmethylether gab man 509 ml (433,7 g; 4,59 mol) Chlordimethylsilan und 2 g des Katalysators Kat I. Man erwärmte auf 40 bis 45°C und entfernte die externe Wärmequelle, sobald die exotherme Reaktion einsetzte. Die Temperatur stieg durch den Verbrauch des Leichtsieders (Chlordimethylsilan) langsam auf 55°C und fiel nach ca. 30 min mit Ende der exothermen Reaktion wieder ab. Man erwärmte nun noch 2 h auf 50°C, kühlte dann auf Raumtemperatur ab und entfernte den Katalysator durch Filtration über eine Fritte. (In der Fritte kristallisiertes Produkt wurde durch Erwärmen mit einem Fön leicht überführt). Das farblose Filtrat wurde im Vakuum von flüchtigen Bestandteilen befreit und man erhielt das Produkt als farblose Kristalle.

Ausbeute: 435 g entsprechend 92 % d. Th.

## Patentansprüche

1. Funktionelle Carbosilan-Dendrimere der allgemeinen Formel
R₄₋ᵢSi[(CH₂)ₙSiXₐR₃₋ₐ]ᵢ
mit i = 3,4, n = 2-6 und R = Alkyl und/oder Aryl, wobei n innerhalb des Moleküls gleich oder ungleich sein kann und wobei die weiteren Reste die folgende Bedeutung haben
a) X = OH
mit a = 1
oder
b) X = [(CH₂)ₙSi(OH)R₂]
mit a = 1 bis 3
oder
c) X = [(CH₂)ₙSiR₃₋ₐ[(CH₂)ₙSi(OH)R₂]ₙ]
mit a = 1 bis 3
oder
d) X = [(CH₂)ₙSiR₃₋ₐ[(CH₂)ₙSiR₃₋ₐ[(CH₂)ₙSi(OH)R₂]ₐ]ₐ]
mit a = 1 bis 3.

2. Funktionelle Carbosilan-Dendrimere nach Anspruch 1, **dadurch gekennzeichnet, daß** die Werte der Indizes n innerhalb des Moleküls gleich sind.

3. Verfahren zur Herstellung der Carbosilan-Dendrimere nach einem der Ansprüche 1 bis 2, **dadurch gekennzeichnet, daß** Dendrimere der Formel
R₄₋ᵢSi[(CH₂)ₙSiZ_{c}R_{3-c}]ᵢ
mit i = 3,4, n = 2 bis 6 und R = Alkyl und/oder Aryl, worin n innerhalb des Moleküls gleich oder ungleich sein kann und wobei die weiteren Reste die folgende Bedeutung haben:
a) Z = Cl, Br, I, OR
mit c = 1,
oder
b) Z = [(CH₂)ₙSiWR₂]
mit c = 1 bis 3 und
W im folgenden die Bedeutung von Cl, Br, I oder OR hat
oder
c) Z = [(CH₂)ₙSiR_{3-c}[(CH₂)ₙSiWR₂]_{c}]
mit c = 1 bis 3,
oder
d) Z = [(CH₂)ₙSiR_{3-c}[(CH₂)ₙSiR_{3-c}[(CH₂)ₙSiWR₂]_{c}]_{c}]
mit c = 1 bis 3,
in Gegenwart einer Base mit Wasser in einem unpolaren Lösungsmittel hydrolysiert werden.

4. Verfahren zur Herstellung von Carbosilan-Dendrimeren nach Anspruch 3, **dadurch gekennzeichnet, daß** als Basen Triorganoamine eingesetzt werden.

5. Verfahren zur Herstellung von Carbosilan-Dendrimeren nach einem der Ansprüche 3 bis 4, **dadurch gekennzeichnet, daß** als unpolares Lösungsmittel aliphatische Ether eingesetzt werden.

6. Verfahren zur Herstellung von Verbindungen der Formel
R₄₋ᵢSi[(CH₂)ₚSiZₑR₃₋ₑ]ᵢ
mit p=2-10, e=1-3, i=3,4 und R=Alkyl und/oder Aryl, wobei p innerhalb des Moleküls gleich oder ungleich sein kann und wobei die weiteren Reste die folgende Bedeutung haben:
a) Z = Halogen, OR
oder
b) Z= [(CH₂)ₚSiWₑR₃₋ₑ] mit W = Halogen, OR
oder
c) Z= [(CH₂)ₚSiR₃₋ₑ[(CH₂)ₚSiWₑR₃₋ₑ]ₑ] mit W = Halogen, OR,
**dadurch gekennzeichnet, daß** Alkenylsilane der Formel
R₄₋ᵢSi[(CH₂)ₚ₋₂Q]ᵢ
mit p = 2-10, i = 3,4, R = Alkyl und/oder Aryl und
a) Q = C₂H₃
oder
b) Q = [(CH₂)ₚSi(C₂H₃)ₑR₃₋ₑ] mit e = 1-3
oder
c) Q = [(CH₂)ₚSiR₃₋ₑ[(CH₂)ₚSi(C₂H₃)ₑR₃₋ₑ]ₑ] mit e = 1-3
mit Hydridosilanen der Formel
HSiPₑR₃₋ₑ
mit e = 1-3, P = Halogen, OR und R = Alkyl und/oder Aryl in Gegenwart von heterogenen Katalysatoren umgesetzt werden.

7. Verfahren nach Anspruch 6, **dadurch gekennzeichnet, daß** als heterogener Katalysator ein Katalysator eingesetzt wird; der als katalytisch aktiven Bestandteil Platin oder eine Platin-Verbindung und als Trägermaterial Kohlenstoff aufweist.

8. Verfahren nach Anspruch 7, **dadurch gekennzeichnet, daß** als heterogener Katalysator Hexachloroplatinsäure auf Aktivkohle eingesetzt wird.

9. Verfahren gemäß einem der Ansprüche 6 bis 8, **dadurch gekennzeichnet, daß** die Umsetzung diskontinuierlich in einem Lösungsmittel erfolgt.

10. Verfahren nach einem der Ansprüche 6 bis 9, **dadurch gekennzeichnet, daß** als Alkenylsilan Tetravinylsilan und als Hydridosilan HSiClMe₂ eingesetzt wird.

11. Organisch-anorganische Hybridmaterialien, erhältlich durch die Umsetzung von Carbosilan-Dendrimeren der Formel
R₄₋ᵢSi[(CH₂)ₙSiXₐR₃₋ₐ]ᵢ
mit i = 3,4, n = 2-6 und R = Alkyl und/oder Aryl, wobei n innerhalb des Moleküls gleich oder ungleich sein kann und wobei die weiteren Reste die folgende Bedeutung haben
a) X = OH
mit a = 1
oder
b) X = [(CH₂)ₙSi(OH)R₂]
mit a = 1 bis 3,
oder
c) X = [(CH₂)ₙSiR₃₋ₐ[(CH₂)ₙSi(OH)R₂]ₐ]
mit a = 1 - 3,
oder
d) X = [(CH₂)ₙSiR₃₋ₐ[(CH₂)ₙSiR₃₋ₐ(CH₂)ₙSi(OH)R₂]ₐ]ₐ]
mit a = 1 - 3,
mit Metallalkoxiden der Formel
M(OR')ₓ
mit M = Si, Ge, Sn, B, Al, Ga, In, Ti, Zr, Hf, V, Nb oder Ta, R' = ein unverzweigter oder verzweigter C₁-C₅-Alkylrest und x, entsprechend der Oxidationsstufe von M, 3 oder 4 bedeutet, mit Wasser und in Gegenwart eines Katalysators.

12. Organisch-anorganische Hybridmaterialien nach Anspruch 11, **dadurch gekennzeichnet, daß** der Katalysator eine metallorganische Verbindung oder organische oder anorganische Säure ist.

13. Verfahren zur Herstellung von Lacken, **dadurch gekennzeichnet, daß** Carbosilan-Dendrimere der Formel
R₄₋ᵢSi[(CH₂)ₙSiXₙR₃₋ₐ]ᵢ
mit i = 3,4, n = 2-6 und R = Alkyl und/oder Aryl, wobei n innerhalb des Moleküls gleich oder ungleich sein kann und wobei die weiteren Reste die folgende Bedeutung haben
a) X = OH
mit a = 1
oder
b) X = [(CH₂)ₙSi(OH)R₂]
mit a = 1 bis 3, bevorzugt a = 3
oder
c) X = [(CH₂)ₙSiR₃₋ₐ[(CH₂)ₙSi(OH)R₂]ₐ]
mit a = 1 - 3,
oder
d) X = [(CH₂)ₙSiR₃₋ₐ[(CH₂)ₙSiR₃₋ₐ[(CH₂)ₙSi(OH)R₂]ₐ]ₐ]
mit a = 1 - 3,
mit Metallalkoxiden der Formel
M(OR')ₓ
mit M = Si, Ge, Sn, B, Al, Ga, In, Ti, Zr, Hf, V, Nb oder Ta, R' = ein unverzweigter oder verzweigter C₁-C₅-Alkylrest und x, entsprechend der Oxidationsstufe von M, 3 oder 4 bedeutet, mit Wasser und in Gegenwart eines Katalysators und gegebenenfalls eines Lösungsmittel umgesetzt werden.

14. Verwendung der Carbosilan-Dendrimere nach einem der Ansprüche 1 bis 2 als Träger zur Anbindung von Metallverbindungen.

15. Verwendung der organisch-anorganischen Hybridmaterialien nach Anspruch 11 als Lack.

## Claims

1. Functional carbosilane-dendrimers with the general formula
R₄₋ᵢSi[(CH₂)ₙSiXₐR₃₋ₐ]ᵢ
with i = 3.4, n = 2-6 and R = alkyl and/or aryl, where n can be the same or different inside the molecule and where the other groups stand for the following
a) X = OH
with a = 1
or
b) X = [(CH₂)ₙSi(OH)R₂]
with a = 1 to 3
or
c) X = [(CH₂)ₙSiR₃₋ₐ[(CH₂)ₙSi(OH)R₂]ₐ]
with a = 1 to 3
or
d) X = [(CH₂)ₙSiR₃₋ₐ[(CH₂)ₙSiR₃₋ₐ[(CH₂)ₙSi(OH)R₂]ₐ]ₐ]
with a = 1 to 3.

2. Functional carbosilane-dendrimers according to claim 1, **characterised in that** the values of the indices n inside the molecule are the same.

3. Method for manufacturing the carbosilane-dendrimers according to one of claims 1 to 2, **characterised in that** dendrimers with the formula
R₄₋ᵢSi[(CH₂)ₙSiZ_{c}R_{3-c}]ᵢ
with i = 3.4, n = 2 to 6 and R = alkyl and/or aryl, where n can be the same or different inside the molecule and where the other groups stand for the following:
a) Z = Cl, Br, I, OR
with c = 1,
or
b) Z = [(CH₂)ₙSiWR₂]
with c = 1 to 3 and
W below stands for Cl, Br, I or OR
or
c) Z = [(CH₂)ₙSiR_{3-c}[(CH₂)ₙSiWR₂]_{c}]
with c = 1 to 3,
or
d) Z = [(CH₂)ₙSiR_{3-c}[(CH₂)ₙSiR_{3-c}[(CH₂)ₙSiWR₂]_{c}]_{c}]
with c = 1 to 3,
are hydrolysed in a non-polar solvent with water in the presence of a base.

4. Method for manufacturing carbosilane-dendrimers according to claim 3, **characterised in that** triorganic amines are used as bases.

5. Method for manufacturing carbosilane-dendrimers according to one of claims 3 to 4, **characterised in that** aliphatic ethers are used as the non-polar solvent.

6. Method for manufacturing compounds with the formula
R₄₋ᵢSi[(CH₂)ₚSiZₑR₃₋ₑ]ᵢ
with p=2-10, e=1-3, i=3.4 and R=alkyl and/or aryl, where n can be the same or different inside the molecule and where the other groups stand for the following:
a) Z = halogen, OR
or
b) Z = [(CH₂)ₚSiWₑR₃₋ₑ] with W = halogen, OR
or
c) Z = [(CH₂)ₚSiR₃₋ₑ[(CH₂)ₚSiWₑR₃₋ₑ]ₑ] with W = halogen, OR,
**characterised in that** alkenylsilanes with the formula
R₄₋ᵢSi[(CH₂)ₚ₋₂Q]ᵢ
with p = 2-10, i = 3.4, R = alkyl and/or aryl and
a) Q = C₂H₃
or
b) Q = [(CH₂)ₚSi(C₂H₃)ₑR₃₋ₑ] with e = 1-3
or
c) Q = [(CH₂)ₚSiR₃₋ₑ[(CH₂)ₚSi(C₂H₃)ₑR₃₋ₑ]ₑ] with e = 1-3
are reacted with hydridosilanes of the formula
HSiPₑR₃₋ₑ
with e = 1-3, P = halogen, OR and R = alkyl and/or aryl in the presence of heterogeneous catalysts.

7. Method according to claim 6, **characterised in that** there is used as a heterogeneous catalyst a catalyst which contains platinum or a platinum compound as the catalytically active component and carbon as support material.

8. Method according to claim 7, **characterised in that** hexachloroplatinic acid on activated carbon is used as the heterogeneous catalyst.

9. Method according to one of claims 6 to 8, **characterised in that** the reaction takes place discontinuously in a solvent.

10. Method according to one of claims 6 to 9, **characterised in that** tetravinylsilane is used as the alkenylsilane and HSiClMe₂ as the hydridosilane.

11. Organic-inorganic hybrid materials that are obtainable by the reacting of carbosilane-dendrimers with the formula
R₄₋ᵢSi[(CH₂)ₙSiXₐR₃₋ₐ]ᵢ
with i = 3.4, n = 2-6 and R = alkyl and/or aryl, where n can be the same or different inside the molecule and where the other groups stand for the following:
a) X = OH
with a = 1
or
b) X = [(CH₂)ₙSi(OH)R₂]
with a = 1 to 3,
or
c) X = [(CH₂)ₙSiR₃₋ₐ[(CH₂)ₙSi(OH)R₂]ₐ]
with a = 1 - 3,
or
d) X = [(CH₂)ₙSiR₃₋ₐ[(CH₂)ₙSiR₃₋ₐ[(CH₂)ₙSi(OH)R₂]ₐ]ₐ]
with a = 1 - 3,
with metal alkoxides of the formula
M(OR')ₓ
with M = Si, Ge, Sn, B, Al, Ga, In, Ti, Zr, Hf, V, Nb or Ta, R' = an unbranched or branched C₁-C₅ alkyl group and x, depending on the oxidation number of M, stands for 3 or 4, with water and in the presence of a catalyst.

12. Organic-inorganic hybrid materials according to claim 11, **characterised in that** the catalyst is an organometallic compound or organic or inorganic acid.

13. Method for manufacturing paints, **characterised in that** carbosilane-dendrimers with the formula
R₄₋ᵢSi[(CH₂)ₙSiXₐR₃₋ₐ]ᵢ
with i = 3.4, n = 2-6 and R = alkyl and/or aryl, where n can be the same or different inside the molecule and where the other groups stand for the following:
a) X = OH
with a = 1
or
b) X = [(CH₂)ₙSi(OH)R₂]
with a = 1 to 3, preferably a = 3
or
c) X = [(CH₂)ₙSiR₃₋ₐ[(CH₂)ₙSi(OH)R₂]ₐ]
with a = 1 - 3,
or
d) X = [(CH₂)ₙSiR₃₋ₐ[(CH₂)ₙSiR₃₋ₐ[(CH₂)ₙSi(OH)R₂]ₐ]ₐ]
with a = 1 - 3,
are reacted with metal alkoxides of the formula
M(OR')ₓ
with M = Si, Ge, Sn, B, Al, Ga, In, Ti, Zr, Hf, V, Nb or Ta, R' = an unbranched or branched C₁-C₅ alkyl group and x, depending on the oxidation number of M, stands for 3 or 4, with water and in the presence of a catalyst and optionally a solvent.

14. Use of the carbosilane-dendrimers according to one of claims 1 to 2 as supports for the bonding of metal compounds.

15. Use of the organic-inorganic hybrid materials according to claim 11 as paint.

## Revendications

1. Dendrimères de carbosilanes fonctionnels de formule générale
R₄₋ᵢSi[(CH₂)ₙSiXₐR₃₋ₐ]ᵢ
avec i = 3, 4, n = 2-6 et R = alkyle et/ou aryle où n peut être identique
ou différent à l'intérieur de la molécule et où les autres restes ont la signification suivante
a) X = OH
avec a = 1
ou
b) X = [(CH₂)ₙSi(OH)R₂]
avec a = 1 à 3
ou
c) X = [(CH₂)ₙSiR₃₋ₐ[(CH₂)ₙSi(OH)R₂]ₐ]
avec a = 1 - 3
ou
d) X = [(CH₂)ₙSiR₃₋ₐ[(CH₂)ₙSiR₃₋ₐ[(CH₂)ₙSi(OH)R₂]ₐ]ₐ]
avec a = 1 - 3.

2. Dendrimères de carbosilanes fonctionnels selon la revendication 1, **caractérisés en ce que** les valeurs des indices n sont les mêmes à l'intérieur de la molécule.

3. Procédé de préparation des dendrimères de carbosilanes selon l'une des revendications 1 et 2 **caractérisé en ce que** des dendrimères de formule
R₄₋ᵢSi[(CH₂)ₙSiZ_{c}R_{3-c}]ᵢ
avec i = 3, 4, n = 2 à 6 et R = alkyle et/ou aryle, où n peut être identique
ou différent à l'intérieur de la molécule et où les autres restes ont la signification suivante :
a) Z = Cl, Br, I, OR
avec c = 1,
ou
b) Z = [(CH₂)ₙSiWR₂]
avec c = 1 à 3 et
W a dans la suite la signification de Cl, Br, I ou OR
ou
c) Z = [(CH₂)ₙSiR_{3-c}[(CH₂)ₙSiWR₂]_{c}]
avec c = 1 à 3,
ou
d) Z = [(CH₂)ₙSiR_{3-c}[(CH₂)ₙSiR_{3-c}[(CH₂)ₙWR₂]_{c}]_{c}]
avec c = 1 à 3,
sont hydrolysés en présence d'une base avec de l'eau dans un solvant non polaire.

4. Procédé de préparation de dendrimères de carbosilanes selon la revendication 3, **caractérisé en ce que** des triorganoamines sont utilisées comme bases.

5. Procédé de préparation de dendrimères de carbosilanes selon l'une des revendications 3 à 4, **caractérisé en ce que** des éthers aliphatiques sont utilisés comme solvant non polaire.

6. Procédé de préparation de composés de formule
R₄₋ᵢSi[(CH₂)ₚSiZₑR₃₋ₑ)ᵢ
avec p = 2-10, e = 1-3, i = 3, 4 et R = alkyle et/ou aryle où p peut être identique ou différent à l'intérieur de la molécule, et où les autres restes ont la signification suivante :
a) Z = halogène, OR
ou
b) Z = [(CH₂)ₚSiWₑR₃₋ₑ] avec W = halogène, OR
ou
c) Z = [(CH₂)ₚSiR₃₋ₑ[(CH₂)ₚSiWₑR₃₋ₑ]ₑ] avec W = halogène, OR,
**caractérisé en ce que** des alcénylsilanes de formule
R₄₋ᵢSi[(CH₂)ₚ₋₂Q]ᵢ
avec p = 2-10, i = 3, 4, R = alkyle et/ou aryle et
a) Q = C₂H₃
ou
b) Q = [(CH₂)ₚSi(C₂H₃)ₑR₃₋ₑ] avec e = 1-3
ou
c) Q = [(CH₂)ₚSiR₃₋ₑ[(CH₂)ₚSi(C₂H₃)ₑR₃₋ₑ]ₑ] avec e = 1-3
sont mis à réagir avec des hydrurosilanes de formule
HSiPₑR₃₋ₑ
avec e = 1-3, P = halogène, OR et R = alkyle et/ou aryle en présence de catalyseurs hétérogènes.

7. Procédé selon la revendication 6, **caractérisé en ce que** l'on utilise comme catalyseur hétérogène un catalyseur qui comporte comme constituant catalytiquement actif du platine ou un composé du platine et comme matériau support du carbone.

8. Procédé selon la revendication 7, **caractérisé en ce que** l'on utilise comme catalyseur hétérogène l'acide hexachloroplatinique sur charbon actif.

9. Procédé selon l'une des revendications 6 à 8, **caractérisé en ce que** la réaction se déroule de manière discontinue dans un solvant.

10. Procédé selon l'une des revendications 6 à 9, **caractérisé en ce que** l'on utilise comme alcénylsilane le tétravinylsilane et comme hydrurosilane HSiClMe₂.

11. Matériaux hybrides organiques-inorganiques pouvant être obtenus par la réaction de dendrimères de carbosilanes de formule
R₄₋ᵢSi[(CH₂)ₙSiXₐR₃₋ₐ]ᵢ
avec i = 3, 4, n = 2-6 et R = alkyle et/ou aryle, où n peut être identique
ou différent à l'intérieur de la molécule et où les autres restes ont la signification suivante
a) X = OH
avec a = 1
ou
b) X = [(CH₂)ₙSi(OH)R₂]
avec a = 1 à 3
ou
c) X = [(CH₂)ₙSiR₃₋ₐ[(CH₂)ₙSi(OR)R₂]ₐ]
avec a = 1 - 3,
ou
d) X = [(CH₂)ₙSiR₃₋ₐ[(CH₂)ₙSiR₃₋ₐ[(CH₂)ₙSi(OH)R₂]ₐ]ₐ]
avec a = 1 -3,
avec des alcoolates métalliques de formule
M(OR')ₓ
avec M = Si, Ge, Sn, B, Al, Ga, In, Ti, Zr, Hf, V, Nb ou Ta, R' = un reste alkyle en C₁-C₅ non ramifié ou ramifié et x, selon l'état d'oxydation de M, représente 3 ou 4, avec l'eau et en présence d'un catalyseur.

12. Matériaux hybrides organiques-inorganiques selon la revendication 11, **caractérisés en ce que** le catalyseur est un composé organométallique ou un acide organique ou inorganique.

13. Procédé de préparation de peintures, **caractérisé en ce que** des dendrimères de carbosilanes de formule
R₄₋ᵢSi[(CH₂)ₙSiXₐR₃₋ₐ]ᵢ
avec i = 3, 4, n = 2-6 et R = alkyle et/ou aryle, où n peut être identique
ou différent à l'intérieur de la molécule et où les autres restes ont la signification suivante
a) X = OH
avec a = 1
ou
b) X = [(CH₂)ₙSi(OH)R₂]
avec a = 1 à 3, de préférence a = 3
ou
c) X = [(CH₂)ₙSiR₃₋ₐ[(CH₂)ₙSi(OR)R₂]ₐ]
avec a = 1 - 3,
ou
d) X = [(CH₂)ₙSiR₃₋ₐ[(CH₂)ₙSiR₃₋ₐ[(CH₂)ₙSi(OH)R₂]ₐ]ₐ]
avec a = 1 -3,
sont mis à réagir avec des alcoolates métalliques de formule
M(OR')ₓ
avec M = Si, Ge, Sn, B, Al, Ga, In, Ti, Zr, Hf, V, Nb ou Ta, R' = un reste alkyle en C₁-C₅ non ramifié ou ramifié et x, selon l'état d'oxydation de M, représente 3 ou 4, avec l'eau et en présence d'un catalyseur et éventuellement d'un solvant.

14. Utilisation des dendrimères de carbosilanes selon l'une des revendications 1 à 2 comme support pour la fixation de composés métalliques.

15. Utilisation des matériaux hybrides organiques-inorganiques selon la revendication 11 comme peinture.
